(19) Europäisches Patentamt / European Patent Office / Office européen des brevets

(11) **EP 4 490 900 B1**

(12) **EUROPEAN PATENT SPECIFICATION**

(45) Date of publication and mention of the grant of the patent:
**12.11.2025 Bulletin 2025/46**

(21) Application number: **23709388.5**

(22) Date of filing: **03.03.2023**

(51) International Patent Classification (IPC):
**H04L 67/51** *(2022.01)*    **H04L 67/56** *(2022.01)*

(52) Cooperative Patent Classification (CPC):
**H04L 67/51; H04L 67/56**

(86) International application number:
**PCT/EP2023/055431**

(87) International publication number:
**WO 2023/169950 (14.09.2023 Gazette 2023/37)**

(54) **NETWORK FUNCTION DELEGATED DISCOVERY AND SELECTION**

DELEGIERTE ERMITTLUNG UND AUSWAHL VON NETZFUNKTIONEN

DÉCOUVERTE ET SÉLECTION DÉLÉGUÉES DES FONCTIONS DE RÉSEAU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2022 PCT/CN2022/080423**

(43) Date of publication of application:
**15.01.2025 Bulletin 2025/03**

(73) Proprietor: **Telefonaktiebolaget LM Ericsson (publ)**
**164 83 Stockholm (SE)**

(72) Inventors:
• **LI, Songmao**
**Shanghai 200335 (CN)**
• **LU, Yunjie**
**Shanghai 200335 (CN)**
• **BARTOLOME RODRIGO, Maria Cruz**
**28189 Torremocha de Jarama, Madrid (ES)**

(74) Representative: **Ericsson**
**Patent Development**
**Torshamnsgatan 21-23**
**164 80 Stockholm (SE)**

(56) References cited:
• **HUAWEI ET AL: "eSBA SMF and PCF selection-option 2", vol. SA WG2, no. Sapporo, Japan; 20190624 - 20190628, 26 June 2019 (2019-06-26), XP051756657, Retrieved from the Internet <URL:http://www.3gpp.org/ftp/tsg_sa/ WG2_Arch/TSGS2_134_Sapporo/Docs/ S2-1908043.zip> [retrieved on 20190626]**
• **HUAWEI ET AL: "eSBA: SMF and PCF selection", vol. SA WG2, no. Reno, NV, USA; 20190513 - 20190517, 7 May 2019 (2019-05-07), XP051720987, Retrieved from the Internet <URL:http://www.3gpp.org/ftp/tsg%5Fsa/WG2% 5FArch/TSGS2%5F133%5FReno/Docs/S2% 2D1905504%2Ezip> [retrieved on 20190507]**
• **ANONYMOUS: "3rd Generation Partnership Project; Technical Specification Group Services and System Aspects; System Architecture for the 5G System; Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.1.0, 11 June 2019 (2019-06-11), pages 1 - 368, XP051753956**

- **"3rd Generation Partnership Project; Technical Specification Group Services and System Aspects; System architecture for the 5G System (5GS); Stage 2 (Release 17)", vol. SA WG2, no. V17.3.0, 23 December 2021 (2021-12-23), pages 1 - 559, XP052083263, Retrieved from the Internet <URL:https://ftp.3gpp.org/Specs/archive/ 23_series/23.501/23501-h30.zip 23501-h30.docx> [retrieved on 20211223]**

**Description**

<u>TECHNICAL FIELD</u>

The present disclosure generally relates to the technical field of telecommunication, and particularly to methods, Network Function (NF) nodes and a corresponding computer readable media for NF delegated discovery and selection.

<u>BACKGROUND</u>

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Document "eSBA SMF and PCF selection-option 2", vol. SA WG2, no. Sapporo, Japan; 20190624 - 20190628 26 June 2019 (2019-06-26), XP051756657, proposes changes to certain procedures of 3GPP TS 23.501 v16.1.0, including the I-SMF selection procedure when delegated discovery is used.

Document "eSBA: SMF and PCF selection", vol. SA WG2, no. Reno, NV, USA; 20190513 - 20190517 7 May 2019 (2019-05-07), XP051720987, is a contribution that discusses, in case delegated discovery is used, how the SMF(s) are selected for home routed PDU session, and/or for PDU session with I-SMF involved in ETSUN scenario.

In Fifth Generation (5G) networks, an NF is a 3rd Generation Partnership Project (3GPP) adopted or 3GPP defined processing function in a network, which has defined functional behavior and 3GPP defined interfaces. An NF may be implemented either as a network element on dedicated hardware, a software instance running on a dedicated hardware, or as a virtualized functional instantiated on an appropriate platform, e.g., on a cloud infrastructure.

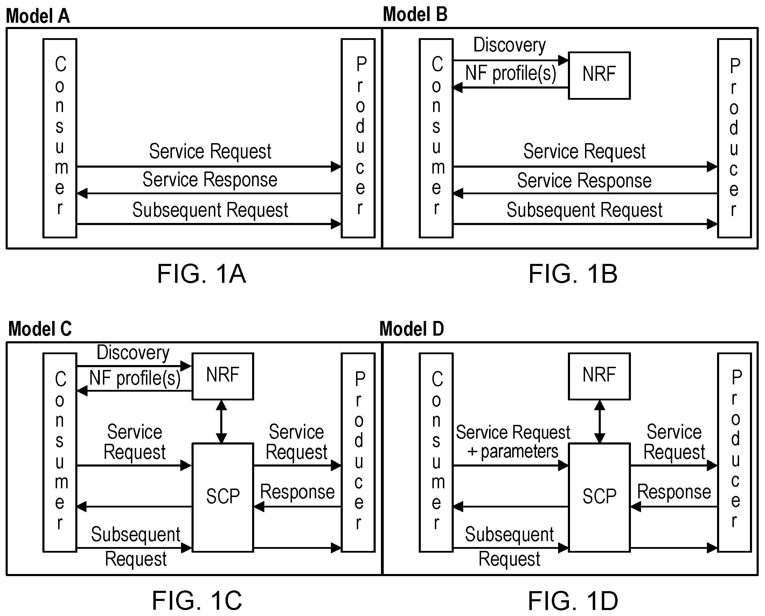

**FIGS. 1A to 1D** illustrate different existing systems for handling service requests, as set out in 3GPP technical standard (TS) 23.501 V17.3.0. In more detail, FIGS. 1A and 1B illustrate respective systems (Model A and Model B) that use direct communication, while FIGS. 1C and 1D illustrate respective systems (Model C and Model D) that use indirect communication.

In the systems illustrated in FIGS. 1A and 1B, a service request is sent directly from an NF node of a service consumer to an NF node of a service producer. A response to the service request is sent directly from the NF node of the service producer to the NF node of the service consumer. Similarly, any subsequent service requests are sent directly from the NF node of the service consumer to the NF node of the service producer. The system illustrated in FIG. 1B also comprises a network repository function (NRF) node. Thus, in the system illustrated in FIG. 1B, the NF node of the service consumer can query the NRF node to discover suitable NF nodes of the service producer to which to send the service request. In response to such a query, the NF node of the service consumer can receive an NF profile for one or more NF nodes of the service producer and, based on the received NF profile(s) can select an NF node of the service producer to which to send the service request. In the system illustrated in FIG. 1A, the NRF node is not used and instead the NF node of the service consumer may be configured with the NF profile(s) of the NF node(s) of the service producer.

In the systems illustrated in FIGS. 1C and 1D, a service request is sent indirectly from the NF node of the service consumer to the NF node of the service producer via a service communication proxy (SCP) node. A response to the service request is sent indirectly from the NF node of the service producer to the NF node of the service consumer via the SCP node. Similarly, any subsequent service requests are sent indirectly from the NF node of the service consumer to the NF node of the service producer via the SCP node. The systems illustrated in FIGS. 1C and 1D also comprise an NRF node.

In the system illustrated in FIG. 1C, the NF node of the service consumer can query the NRF node to discover suitable NF nodes of the service producer to which to send the service request. In response to such a query, the NF node of the service consumer can receive an NF profile for one or more NF nodes of the service producer and, based on the received NF profile(s) can select an NF node of the service producer to which to send the service request. In this case, the service request sent from the NF node of the service consumer to the SCP node comprises the address of the selected NF node of the service producer. The NF node of the service consumer can forward the service request without performing any further discovery or selection. In case the selected NF node of the service producer is not accessible for any reason, it may be up to the NF node of the service consumer to find an alternative. In other cases, the SCP node may communicate with the NRF node to acquire selection parameters (e.g. location, capacity, etc.) and the SCP node may select an NF node of the service producer to which to send the service request.

In the system (Model D) illustrated in FIG. 1D, the NF node of the service consumer does not carry out the discovery or selection process. Instead, the NF node of the service consumer adds any necessary discovery and selection parameters (required to find a suitable NF node of the service producer) to the service request that it sends via the SCP node. The SCP node uses the request address and the discovery and selection parameters in the service request to route the service request to a suitable NF node of the service producer. Thus, in the system illustrated in FIG. 1D, where indirect communication with delegated discovery is used, the NF node of the service consumer sends the service request to the SCP node and provides within the service request to the SCP node the discovery and selection parameters necessary to discover and select an NF node of a service producer. The SCP node can perform discovery with the NRF node to discover a target NF node of the service producer to which to route the service request. The SCP node can discover a target NF node of the service producer in the manner indicated in 3GPP TS 23.502 V17.3.0.

For the fifth generation core (5GC), from 3GPP Release 16, the SCP node is included as a network element to allow indirect communication between an NF node of a service consumer and an NF node of a service producer. That is, the SCP node can be used in indirect routing scenarios. The indirect communication that is used can be either of the two indirect communications options described earlier with reference to FIGS. 1C and 1D. In the 5GC, the SCP node can be an NF node that provides centralized capabilities, such as service based interface (SBI) routing, NF discovery and selection, failover, message screening, etc.

In some scenarios, a client (e.g. an NF node of a service consumer) may need to initially select and/or reselect (e.g. in case of a failure) a server (e.g. an NF node of a service producer) among a possible plurality of (e.g. functionally equivalent) server instances. Commonly, this selection and/or reselection can be performed based on server characteristics (or properties). These characteristics may be any one or more of those that are defined in a profile of the server. The characteristics can include, for example, server instance, server service instance priority, locality, capacity, and/or load, etc.

As per the service definition in 3GPP TS 23.501 V17.3.0, the following has been defined: "Model D - Indirect communication with delegated discovery: Consumers do not do any discovery or selection. The consumer adds any necessary discovery and selection parameters required to find a suitable producer to the service request. The SCP uses the request address and the discovery and selection parameters in the request message to route the request to a suitable producer instance. The SCP can perform discovery with a Network Repository Function (NRF) and obtain a discovery result."

In Model D, the SCP discovers the target NF service producer. As per the service definition in 3GPP TS 23.501 V17.3.0, the following service has been defined: "If Indirect Communication with delegated discovery is used, the NF service consumer sends the request to the SCP and provides within the service request to the SCP the discovery and selection parameters necessary to discover and select an NF service producer."

There are provided Deployments Topologies with Specific Session Management Function (SMF) Service Areas (DTSSA). In 3GPP Release 16, a DTSSA feature was introduced to allow a Control Plane (CP)/User Plane (UP) path change based on specific SMF serving areas. That is, each SMF within a network may be configured with a specific serving area indicating the areas that it can serve the user equipment (UE) located within. As an anchor SMF is not subject to change in normal cases, when the UE is outside of the serving area of the anchor SMF, an Intermediate SMF (I-SMF) will be inserted for a Protocol Data Unit (PDU) session with an Intermediate User Plane Function (I-UPF) to relay the user plane path to a PDU Session Anchor (PSA) User Plane Function (UPF) controlled by the anchor SMF. During UE mobility, if the UE moves outside of the serving area of the current I-SMF, a new I-SMF will be added into the PDU session replacing the old I-SMF, or if the UE moves into the serving area of the anchor SMF, the I-SMF should be removed.

3GPP TS 23.501 V17.3.0 specifies the following:

5.34 Support of deployments topologies with specific SMF Service Areas

5.34.1 General

When the UE is outside of the SMF Service Area, or the current SMF cannot serve a target Data Network Access Identifier (DNAI) for traffic routing towards Local Data Network (DN), an I-SMF is inserted between the SMF and the Access Management Function (AMF). The I-SMF has a N11 interface with the AMF and a N16a interface with the SMF and is responsible of controlling the UPF(s) that the SMF cannot directly control. The exchange of a Session Management (SM) context and forwarding of tunnel information if needed are done between two SMFs directly without involvement of AMF.

5.34.2.2 Non-roaming architecture

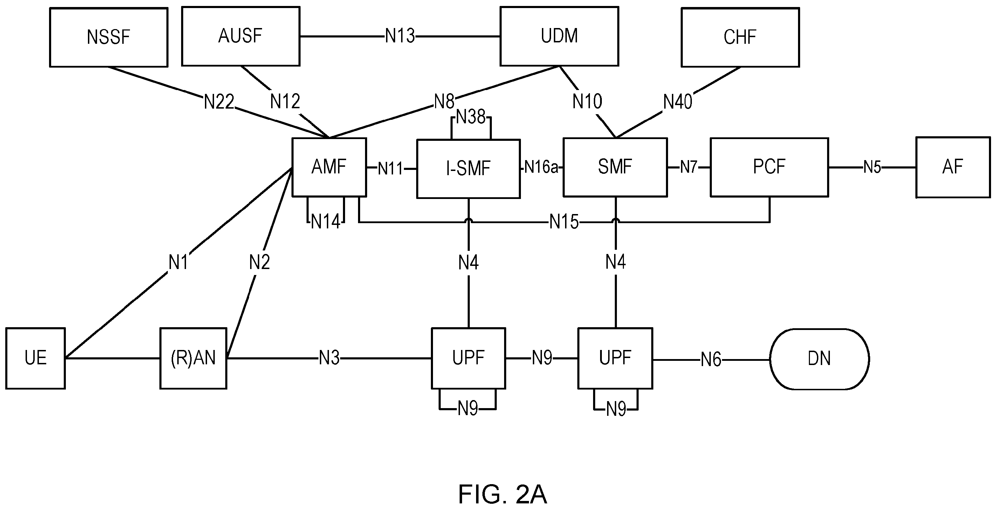

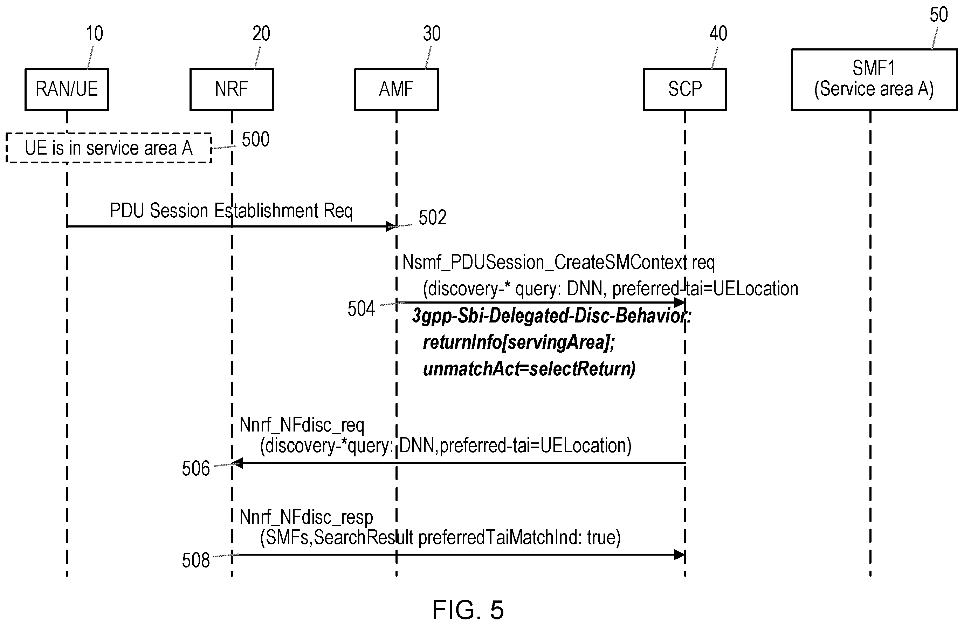

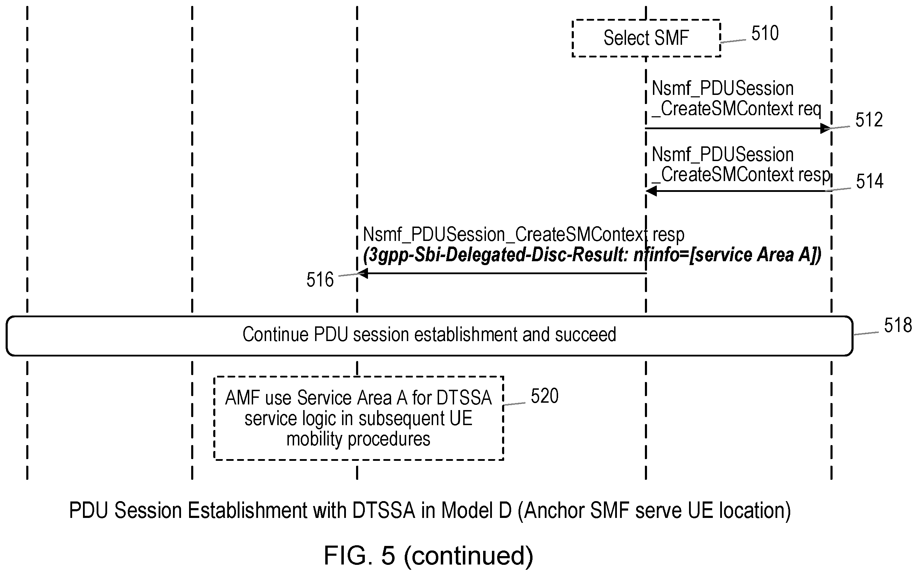

Figure 5.34.2.2-1 (corresponding to FIG. 2A of the present disclosure) depicts a non-roaming architecture with an I-SMF insertion to the PDU Session without uplink classifier (UL-CL)/branching point (BP), using reference point representation.

NOTE 1: N16a is the interface between SMF and I-SMF.
NOTE 2: N38 is the interface between I-SMFs.

5.34.3 I-SMF selection, Visited-SMF (V-SMF) reselection

The AMF is responsible of detecting when to add or to remove an I-SMF or a V-SMF for a PDU Session. For this purpose, the AMF gets, from NRF, information about the Service Area and supported DNAI(s) of SMF(s).

During mobility events such as Hand-Over or AMF change, if the service area of the SMF does not include a new UE location, then the AMF selects and inserts an I-SMF which can serve the UE location and single-network slice selection assistance information (S-NSSAI). Conversely if the AMF detects that an I-SMF is no more needed (as the service area of the SMF includes the new UE location), it removes the I-SMF and interfaces directly with the SMF of the PDU Session. If the AMF detects that the SMF cannot serve the UE location (e.g. due to mobility), then the AMF selects a new I-SMF serving the UE location. If the existing I-SMF (or V-SMF) cannot serve the UE location (e.g. due to mobility) and the service area of the SMF does not include the new UE location (or the PDU Session is Home Routed), then the AMF initiates an I-SMF (or V-SMF) change. A V-SMF change may take place either at intra-Public Land Mobile Network (PLMN) or inter-PLMN mobility.

There are provided NF Discovery with Preferred Parameters. As specified in 3GPP TS 29.510 V17.4.0, the NF consumer may discover and select the NF producer by querying the NRF with an NF Discovery Service. To do that, the NF consumer sends a discovery request to the NRF including a set of query parameters indicating the matching criteria. The NRF will search an NF Registration Repository and return the NF Producer candidates which match all the query parameters. If at least one query parameter cannot be fulfilled, the NF producer instance will not be returned by the NRF.

Additionally, the NF consumer may include in the discovery request some preferred parameter(s) which is optional to match. When the preferred query parameters are received, the NRF will first try to find all NF producers that match all parameters including the preferred ones; if such an NF producer does not exist, the NRF can return NF producers not matching the preferred parameters and in the search result indicating that the preferred-parameter(s) are not matched. For example, the AMF provides preferred-tai (preferred tracking area identity) as shown in Table 1 below for SMF selection with DTSSA:

Table 1 (corresponding to Table 6.2.3.2.3.1-1 of 3GPP TS 29.510 V17.4.0): Uniform Resource Identifier (URI) query parameters supported by a GET method on this resource

| Name | Data type | P | Cardinality | Description | Applicability- |
|------|-----------|---|-------------|-------------|----------------|
| preferred -tai | Tai | O | 0..1 | When present, the NRF shall prefer NF profiles that can serve a Tracking Area Identity (TAI), or the NRF shall return NF profiles not matching the TAI if no NF profile is found matching the TAI. (NOTE 5) | Query-Params-Ext2 |

Table 2 (corresponding to Table 6.2.6.2.6-1 of 3GPP TS 29.510 V17.4.0): Definition of type PreferredSearch

| Attribute name | Data type | P | Cardinality | Description |
|----------------|-----------|---|-------------|-------------|
| preferredTaiMatch Ind | boolean | C | 0..1 | Indicates whether all the returned NFProfiles match or do not match the query parameter preferred-tai. true: Match false (default): Not Match |

However, there is a logic contradiction between the DTSSA feature and Indirect Communication Model D (with delegated discovery):
DTSSA requires that the NF Consumer (i.e. the AMF) always has information of the NF Producer (i.e. SMF), e.g. the serving area of the SMF, to identify whether I-SMF/V-SMF is needed, or to be changed; but with indirect Communication Model D, the NF consumer doesn't get hold of the NF profile of the SCP discovered/selected NF Producer.

With DTSSA, the NF Consumer (i.e. the AMF) will pass the preferred-tai (set to UE location) as a discovery parameter in NRF discovery for an anchor SMF. As stated previously, the NRF will always return a candidate list of anchor SMFs when any SMF can serve the Data Network Name (DNN)/Slice of the PDU session regardless whether any candidate SMF can serve the preferred-tai or not (match result indicated in the response). The AMF, after performing a search with the preferred-tai, will take different behaviors based on whether the preferred-tai is matched or not: if the preferred-tai is matched, the AMF will create SM context directly on the anchor SMF; if the preferred-tai is not matched, the AMF will not create SM context on the anchor SMF. Instead, the AMF will create SM context on an I-SMF and pass the anchor SMF information to the I-SMF. However, with Indirect Communication Model D, the SCP does not have such business logic and will always try to create SM Context on the anchor SMF because the NRF responded positively with the NF Producer candidates, i.e. the discovery is simply successful from SCP point of view. If the preferred-tai is not matched, the Create SM Context on the anchor SMF will fail, which leads to bad Key Performance Indicator (KPI) in network.

Additionally, if the preferred-tai is not matched, the SCP selects an anchor SMF from the candidate list, and invokes the Create SM Context, which will definitely fail. Upon receiving an error response, the SCP may select another candidate SMF to retry the SM Context Creation and will fail again. In the worst case, the SCP will try out the whole list of SMF candidates, in which case a serious problem is the service flow.

3GPP TS 23.501 V17.3.0 has tried to provide a compromised flow to support DTSSA with Indirect Communication with Model D. As specified in section 5.34.3 of 3GPP TS 23.501 V17.3.0, which relates to "I-SMF selection, V-SMF reselection", the following has been defined:

If delegated SMF discovery is used at PDU Session establishment:

1. The AMF sends a Nsmf_PDUSession_CreateSMContext Request to SCP and includes the parameters as defined in clause 6.3.2 of 3GPP TS 23.501 V17.3.0 (e.g. the DNN, required SMF capabilities, UE location) as discovery and selection parameters. If the SCP successfully selects an SMF matching all discovery and selection parameters, the SCP forwards the Nsmf_PDUSession_CreateSMContext Request to the selected SMF.

2. If the SCP cannot select an SMF matching all discovery and selection parameters, the SCP returns a dedicated error to AMF. In this case, the I-SMF also needs to be discovered.

3. Upon reception of the error from the SCP that an SMF matching all discovery and selection parameters cannot be found, the AMF performs the discovery and selection of the SMF from NRF (thus not providing the UE location as a discovery parameter). The AMF may indicate the maximum number of SMF instances to be returned from NRF, i.e. SMF selection at NRF.

4. The AMF sends a Nsmf_PDUSession_CreateSMContext Request to the SCP, which includes the endpoint (e.g. Uniform Resource Identifier (URI)) of the selected SMF and the discovery and selection parameters as defined in clause 6.3.2 of 3GPP TS 23.501 V17.3.0 except the DNN and the required SMF capabilities, i.e. parameter for I-SMF selection. The SCP performs discovery and selection of the I-SMF and forwards the Nsmf_PDUSession_CreateSMContext Request to the selected I-SMF.

5. The I-SMF sends a Nsmf_PDUSession_Create Request towards the SMF via the SCP; the I-SMF uses the received endpoint (e.g. URI) of the selected SMF to construct the target destination to be addressed. The SCP forwards the Nsmf_PDUSession_Create Request to the SMF.

6. The SMF answers to the I-SMF that answers to the AMF; in this answer the AMF receives an I-SMF identifier (ID).

7. Upon reception of a response from the I-SMF, based on the received I-SMF ID, the AMF may obtain the SMF Service Area of the I-SMF from NRF. The AMF uses the SMF Service Area of the I-SMF to determine the need for I-SMF relocation upon subsequent UE mobility.

Nevertheless, there are limitations in the above flow, as follows:

- The flow based on discovery failure with fallback to Model C, i.e., when the discovery of anchor SMF failed, the AMF needs to explicitly perform a separate NF discovery towards NRF to find an anchor SMF.

- After the I-SMF is selected by the SCP and the SM is created successfully created, the AMF may again perform a separate NF discovery to get the serving areas of the I-SMF.

This requires that the AMF always needs to contact the NRF (supporting Model B/C) even if it is configured to use Model D. It also introduces extra network traffics, e.g., 1 to 2 extra transactions per establishment.

SUMMARY

In order to at least solve the problems as described above, the present disclosure proposes technical solutions capable of allowing the NF consumer to indicate the SCP behavior in the communication, e.g. in model D.

According to a first aspect of the present disclosure, there is provided a method performed by an NF consumer. The method comprises: transmitting, to an SCP, a request message for a service operation, wherein the request message for the service operation at least includes an indication that the SCP shall return required NF profile information of at least one NF producer discovered by the SCP; and receiving, from the SCP, the required NF profile information of the at least one NF producer.

The request message for the service operation further comprises: a first set of mandatory parameters and a second set of preferred parameters, and an indication of an action of the SCP performed when NF producer candidates, which are discovered by the SCP from an NRF and which match the first set of mandatory parameters, do not match at least one of the second set of preferred parameters.

In an exemplary embodiment, the request message for the service operation may further comprise: a preferred parameter indication of one or more preferred parameters in the second set, wherein the indication of the action of the SCP indicates the action of the SCP performed when the NF producer candidates do not match at least one of the one or more preferred parameters indicated by the preferred parameter indication.

In an exemplary embodiment, the indication of the action of the SCP may comprise at least one of:

an indication that the SCP selects an NF producer from the NF producer candidates, continues with invocation of the service operation, and includes the required NF profile information of the selected NF producer in a message to the NF consumer;

an indication that the SCP selects an NF producer from the NF producer candidates, and returns the required NF profile information of the selected NF producer to the NF consumer without invocation of the service operation; or

an indication that the SCP returns the required NF profile information of the discovered NF producer candidates without selection of an NF producer.

In an exemplary embodiment, the request message for the service operation may further comprise: a matching result indication that the SCP shall return, to the NF consumer, a matching result of at least one of the second set of preferred parameters.

In an exemplary embodiment, the NF producer may be selected from NF producer candidates that match the one or more preferred parameters indicated by the preferred parameter indication, and said receiving may further comprise receiving the required NF profile information of the selected NF producer in a response message for the service operation received from the selected NF producer and forwarded by the SCP.

In an exemplary embodiment, the NF producer may be selected from the NF producer candidates that do not match the at least one of the one or more preferred parameters indicated by the preferred parameter indication, and said receiving further may comprise receiving the required NF profile information of the selected NF producer in a response message for the service operation received from the NF producer and forwarded by the SCP.

In an exemplary embodiment, the response message for the service operation received from the NF producer and forwarded by the SCP may further comprise the matching result of the at least one of the second set of preferred parameters.

In an exemplary embodiment, the NF producer may be selected from the NF producer candidates that do not match the at least one of the one or more preferred parameters indicated by the preferred parameter indication, and said receiving may further comprise receiving the required NF profile information of the selected NF producer in a failure message for the service operation, which further may comprise a cause code of not matching the at least one of the second set of preferred parameters.

In an exemplary embodiment, the failure message for the service operation may further comprise the matching result of the at least one of the second set of preferred parameters.

In an exemplary embodiment, at least one of the indication that the SCP shall return the required NF profile information, the indication of the action of the SCP, the preferred parameter indication, or the matching result indication may be carried in one of:

a new HTTP header,

an existing HTTP header, or

a message body of the corresponding message.

In an exemplary embodiment, the NF consumer may be an AMF, and the NF producer may be an SMF, wherein the required NF profile information of the discovered NF producer may comprise a service area of the discovered SMF, and the second set of preferred parameters may comprise a location of a related User Equipment (UE).

According to a second aspect of the present disclosure, there is provided a method performed by an SCP. The method comprises receiving, from an NF consumer, a request message for a service operation, wherein the request message for the service operation at least includes an indication that the SCP shall return required NF profile information of at least one NF producer discovered by the SCP; and transmitting, to the NF consumer, the required NF profile information of the at least one NF producer.

The request message for the service operation further comprises a first set of mandatory parameters and a second set of preferred parameters, and an indication of an action of the SCP performed when NF producer candidates, which are discovered by the SCP from an NRF and match the first set of mandatory parameters, do not match at least one of the second set of preferred parameters.

In an exemplary embodiment, the request message for the service operation may further comprise a preferred parameter indication of one or more preferred parameters in the second set, wherein the indication of the action of the SCP indicates the action of the SCP performed when the NF producer candidates do not match at least one of the one or more preferred parameters indicated by the preferred parameter indication.

In an exemplary embodiment, the indication of the action of the SCP may comprise at least one of:

an indication that the SCP selects an NF producer from the NF producer candidates, continues with invocation of the service operation, and includes the required NF profile information of the selected NF producer in a message to the NF consumer;

an indication that the SCP selects an NF producer from the NF producer candidates, and returns the required NF profile information of the selected NF producer to the NF consumer without invocation of the service operation; or

an indication that the SCP returns the required NF profile information of the discovered NF producer candidates without selection of an NF producer.

In an exemplary embodiment, the request message for the service operation may further comprise a matching result indication that the SCP shall return, to the NF consumer, a matching result of at least one of the second set of preferred parameters.

In an exemplary embodiment, the method may further comprise: receiving, from the NRF, NF producer candidates that match the one or more preferred parameters indicated by the preferred parameter indication; and selecting the NF producer from the NF producer candidates, wherein said transmitting may further comprise transmitting the required NF profile information of the selected NF producer in a response message for the service operation received from the selected NF producer and forwarded to the NF consumer.

In an exemplary embodiment, the method may further comprise: receiving, from the NRF, the NF producer candidates that do not match the at least one of the one or more preferred parameters indicated by the preferred parameter indication; and selecting the NF producer from the NF producer candidates, wherein said transmitting may further comprise transmitting the required NF profile information of the selected NF producer in a response message for the service operation received from the NF producer and forwarded to the NF consumer.

In an exemplary embodiment, the response message for the service operation received from the NF producer and forwarded to the NF consumer may further comprise the matching result of the at least one of the second set of preferred parameters.

In an exemplary embodiment, the method may further comprise receiving, from the NRF, the NF producer candidates that do not match the at least one of the one or more preferred parameters indicated by the preferred parameter indication; and selecting the NF producer from the NF producer candidates, according to the indication of the action of the SCP, wherein said transmitting may further comprise transmitting the required NF profile information of the selected NF producer in a failure message for the service operation, which may further comprise a cause code of not matching the at least one of the second set of preferred parameters.

In an exemplary embodiment, the failure message for the service operation may further comprise the matching result of the at least one of the second set of preferred parameters.

In an exemplary embodiment, at least one of the indication that the SCP shall return the required NF profile information, the indication of the action of the SCP, the preferred parameter indication, or the matching result indication may be carried in one of:

a new HTTP header,
an existing HTTP header, or
a message body of the corresponding message.

In an exemplary embodiment, the NF consumer may be an AMF, and the NF producer may be an SMF, wherein the required NF profile information of the discovered NF producer may comprise a service area of the discovered SMF, and the second set of preferred parameters may comprise a location of a related UE.

According to a third aspect of the present disclosure, an NF consumer is provided. The NF consumer comprises at least one processor configured to operate in accordance any of the methods according to the first aspect of the present disclosure. In some embodiments, the NF consumer may comprise at least one memory, storing instructions which, when executed on the at least one processor, cause the at least one processor to perform any of the methods according to the first aspect of the present disclosure.

According to fourth aspect of the present disclosure, an SCP is provided. The SCP comprises at least one processor configured to operate in accordance any of the methods according to the second aspect of the present disclosure. In some embodiments, the SCP may comprise at least one memory, storing instructions which, when executed on the at least one processor, cause the at least one processor to perform any of the methods according to the second aspect of the present disclosure.

According to fifth aspect of the present disclosure, there is provided a computer program comprising instructions which, when executed by at least one processor, cause the at least one processor to perform any of the methods according to the first aspect and/or the second aspect of the present disclosure.

The technical solutions according to the exemplary embodiments of the present disclosure as described above can provide mechanisms to allow the NF consumer to guide the SCP behavior on delegated discovery and selection with preferred parameters and return the (e.g. essential) information of the selected NF producer. This reduces the overall network traffic, and allows the NF consumer to perform specific service logic, optimizing the service flow with additional information of the selected NF producer returned from the SCP.

BRIEF DESCRIPTION OF THE DRAWINGS

The objects, advantages and characteristics of the present disclosure will be more apparent, according to descriptions of preferred embodiments in connection with the drawings, wherein:

FIGS. 1A to 1D schematically show different existing systems for handling service requests;

FIG. 2A schematically shows a non-roaming architecture with an I-SMF insertion to the PDU Session with no UL-CL/BP, using reference point representation;

FIG. 2B schematically shows a 5G network architecture using service-based interfaces between the NFs in the control plane, instead of the point-to-point reference points/interfaces used in the 5G network architecture of FIG. 2A;

FIG. 3 schematically shows a method performed by an NF consumer (e.g. for NF delegated discovery and selection) according to an exemplary embodiment of the present disclosure;

FIG. 4 schematically shows a method performed by an SCP (e.g. for NF delegated discovery and selection) according to an exemplary embodiment of the present disclosure;

FIG. 5 schematically shows an exemplary signaling diagram of PDU Session Establishment with DTSSA in Model D where Anchor SMF can serve UE location, in which the methods (e.g. for NF delegated discovery and selection) according to exemplary embodiments of the present disclosure are applied;

FIG. 6 schematically shows another exemplary signaling diagram of PDU Session Establishment with DTSSA in Model D where Anchor SMF cannot serve UE location, in which the methods (e.g. for NF delegated discovery and selection) according to exemplary embodiments of the present disclosure are applied;

FIG. 7 schematically shows a structural block diagram of an NF consumer according to an exemplary embodiment of the present disclosure;

FIG. 8 schematically shows a structural block diagram of an NF consumer according to another exemplary embodiment of the present disclosure;

FIG. 9 schematically shows a structural block diagram of an SCP according to an exemplary embodiment of the present disclosure; and

FIG. 10 schematically shows a structural block diagram of an SCP according to another exemplary embodiment of the present disclosure.

It should be noted that throughout the drawings, same or similar reference numbers are used for indicating same or similar elements; various parts in the drawings are not drawn to scale, but only for an illustrative purpose, and thus should not be understood as any limitations and constraints on the scope of the present disclosure.

DETAILED DESCRIPTION

Hereinafter, the principle and spirit of the present disclosure will be described with reference to illustrative embodiments. Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may make reference to the following documents, which are incorporated herein in their entirety by reference:

> 1) 3GPP TS 23.501, V17.3.0, "System architecture for the 5G System (5GS); Stage 2" (2021-12),
> 2) 3GPP TS 29.510, V17.4.0, "5G System; Network function repository services; Stage 3" (2021-12), and
> 3) 3GPP TS 29.500, V17.5.0 "5G System; Technical Realization of Service Based Architecture; Stage 3" (2021-12).

References in this specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of the person skilled in the art to affect such feature, structure, or characteristic in connection with other embodiments whether or not explicitly described.

Those skilled in the art will appreciate that the term "exemplary" is used herein to mean "illustrative," or "serving as an example," and is not intended to imply that a particular embodiment is preferred over another or that a particular feature is essential. Likewise, the terms "first" and "second," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" refers to a device in a wireless communication network via which a terminal device or another network node accesses the network and receives services therefrom. The network node refers to any Network Function (NF), a base station (BS), an access point (AP), or any other suitable device in the wireless communication network. The BS may be, for example, a node B (NodeB or NB), an evolved NodeB (eNodeB or eNB), or gNB, a Remote Radio Unit (RRU), a radio header (RH), a remote radio head (RRH), a relay, a low power node such as a femto, a pico, and so forth. Yet further examples of the network node may include multi-standard radio (MSR) radio equipment such as MSR BSs, network controllers such as radio network controllers (RNCs) or base station controllers (BSCs), base transceiver stations (BTSs), transmission points, transmission nodes. More generally, however, the network node may represent any suitable device (or group of devices) capable, configured, arranged, and/or operable to enable and/or provide a terminal device access to the wireless communication network or to provide some service to a terminal device that has accessed the wireless communication network. In some embodiments, the non-limiting terms wireless device or UE are used interchangeably. The UE herein can be any type of wireless device capable of communicating with a network node or another wireless device over radio signals, such as wireless device. The UE may also be a radio communication device, target device, device-to-device (D2D) wireless device, machine type wireless device or wireless device capable of machine to machine communication (M2M), low-cost and/or low-complexity wireless device, a sensor equipped with wireless device, Tablet, mobile terminals, smart phone, laptop embedded equipped (LEE), laptop mounted equipment (LME), universal serial bus (USB) dongles, Customer Premises Equipment (CPE), an Internet of Things (IoT) device, or a Narrowband IoT (NB-IOT) device, etc.

Note that although terminology from one particular wireless system, such as, for example, 3GPP long-term evolution (LTE) and/or New Radio (NR), may be used in this disclosure, this should not be seen as limiting the scope of the present disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a UE or a network node may be distributed over a plurality of UEs and/or network nodes. In other words, it is contemplated that the functions of the network node and UE described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

**FIG. 2A** schematically shows a non-roaming architecture with an I-SMF insertion to the PDU Session with no UL-CL/BP, using reference point representation, where interaction between any two NFs is represented by a point-to-point reference point/interface.

Seen from the access side, the 5G network architecture shown in FIG. 2A comprises a plurality of User Equipment (UEs) connected to either a Radio Access Network (RAN) or an Access Network (AN) directly as well as an Access and Mobility Management Function (AMF) indirectly, for example, via the RAN or AN. Typically, the R(AN) comprises base stations, e.g. such as evolved Node Bs (eNBs) or 5G base stations (gNBs) or similar. Seen from the core network side, the 5G core NFs shown in FIG. 2A include a Network Slice-specific and Standlaone Non-Public Network (SNPN) Authentication and Authorization Function (NSSAAF), a Network Slice Selection Function (NSSF), an Authentication Server Function (AUSF), a Unified Data Management (UDM), a Network Slice Admission Control Function (NSACF), an Access and Mobility Management Function (AMF), a Session Management Function (SMF), a Policy Control Function (PCF), an Application Function (AF), and a User Plane Function (UPF).

Reference point representations of the 5G network architecture are used to develop detailed call flows in the normative standardization. The N1 reference point is defined to carry signaling between UE and AMF. The reference points for connecting between AN and AMF and between AN and UPF are defined as N2 and N3, respectively. There is a reference point, N11, between AMF and SMF, which implies that SMF is at least partly controlled by AMF. N4 is used by SMF and UPF so that the UPF can be set using the control signal generated by the SMF, and the UPF can report its state to the SMF. N9 is the reference point for the connection between different UPFs, and N14 is the reference point connecting between different AMFs, respectively. N15 and N7 are defined since PCF applies policy to AMF and SMF, respectively. N12 is required for the AMF to perform authentication of the UE. N8 and N10 are defined because the subscription data of UE is required for AMF and SMF.

The 5G core network aims at separating user plane and control plane. The user plane carries user traffic while the control plane carries signaling in the network. In FIG. 2A, the UPF is in the user plane and all other NFs, i.e., AMF, SMF, PCF, AF, AUSF, and UDM, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF and SMF are independent functions in the control plane. Separated AMF and SMF allow independent evolution and scaling. Other control plane functions like PCF and AUSF can be separated as shown in FIG. 2A. Modularized function design enables the 5G core network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

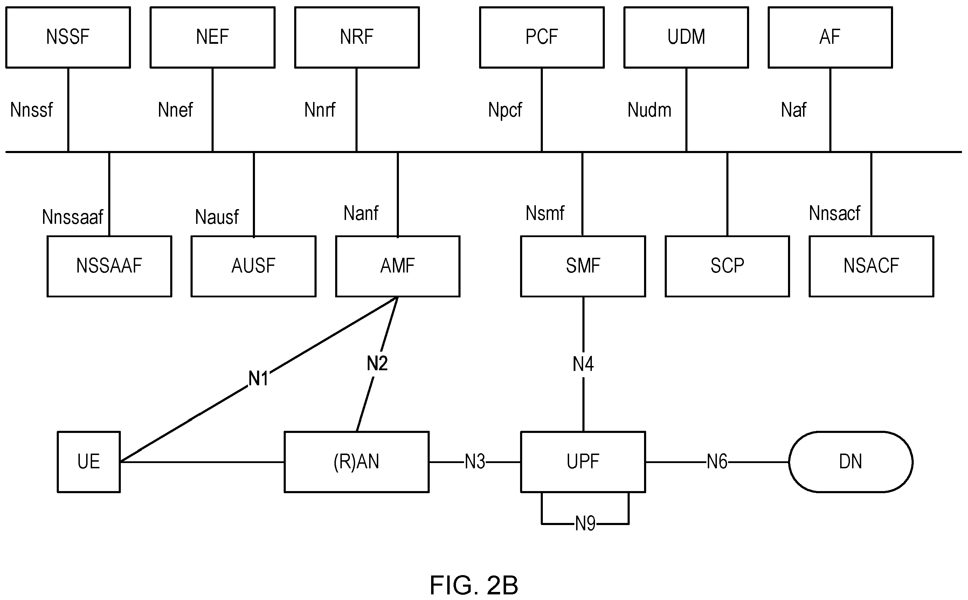

**FIG. 2B** schematically shows a 5G network architecture using service-based interfaces between the NFs in the control plane, instead of the point-to-point reference points/interfaces used in the 5G network architecture of FIG. 2A. However, the NFs described above with reference to FIG. 2A correspond to the NFs shown in FIG. 2B. The service(s) etc. that an NF provides to other authorized NFs can be exposed to the authorized NFs through the service-based interface. In FIG. 2B, the service based interfaces are indicated by the letter "N" followed by the name of the NF, e.g. Namf for the service based interface of the AMF and Nsmf for the service based interface of the SMF etc.

Some properties of the NFs shown in FIGS. 2A and 2B may be described in the following manner. The AMF provides UE-based authentication, authorization, mobility management, etc. A UE even using multiple access technologies is basically connected to a single AMF because the AMF is independent of the access technologies. The SMF is responsible for session management and allocates internet protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support Quality of Service (QoS). Based on the information, PCF determines policies about mobility and session management to make AMF and SMF operate properly. The AUSF supports authentication function for UEs or similar and thus stores data for authentication of UEs or similar while UDM stores subscription data of UE. The Data Network (DN), not part of the 5G core network, provides Internet access or operator services and similar.

As previously described, an NF may be implemented either as a network element on a dedicated hardware, as a software instance running on a generic hardware, or as a virtualized function instantiated on an appropriate platform, e.g.,

a cloud infrastructure.

If an SCP is deployed, it can be used for indirect communication between NFs and NF services. SCP does not expose services itself. If indirect communication with delegated discovery is used, the NF service consumer sends the service request to the SCP and provides within the service request to the SCP the discovery and selection parameters necessary to discover and select an NF service producer.

The basic ideas of the present disclosure mainly consist in that:

- the NF consumer can provide an indication for the SCP to provide required NF profile information of discovered NF producers or an NF producer selected from the discovered NF producers, so that the NF consumer may use the required NF profile information. For example, the AMF (as an example of the NF consumer) may provide an indication for the SCP to provide serving area information of the selected SMF (as an example of the NF producer), so that the AMF may use the serving area information of the selected SMF for DTSSA scenarios. Accordingly, the SCP shall (or is to) return the required NF profile information of the discovered NF producers or the NF producer selected from the discovered NF producers, in positive or negative responses;

- the NF consumer can provide preferred parameters with an indication on the SCP behavior upon a preferred parameter matching result. For example, the AMF may provide "preferred-tai" as a preferred parameter, and an indication that the SCP shall not (or is not to) invoke Create_SM_Context operation on the selected anchor SMF if the selected anchor SMF does not match "preferred-tai". Accordingly, the SCP behaves according to the indication based on the preferred parameter matching result. For example, if the indication says to "not proceed with unmatched result", the SCP may select the NF producer and return the required information of the selected NF producer to the NF consumer (with suitable cause code); and

- when the NF consumer receives the information of the NF producer from the SCP, the NF consumer may pass the information to another NF consumer if needed to support another NF consumer service logic. For example, an old AMF passes the serving area of the SMF(s) to a new AMF.

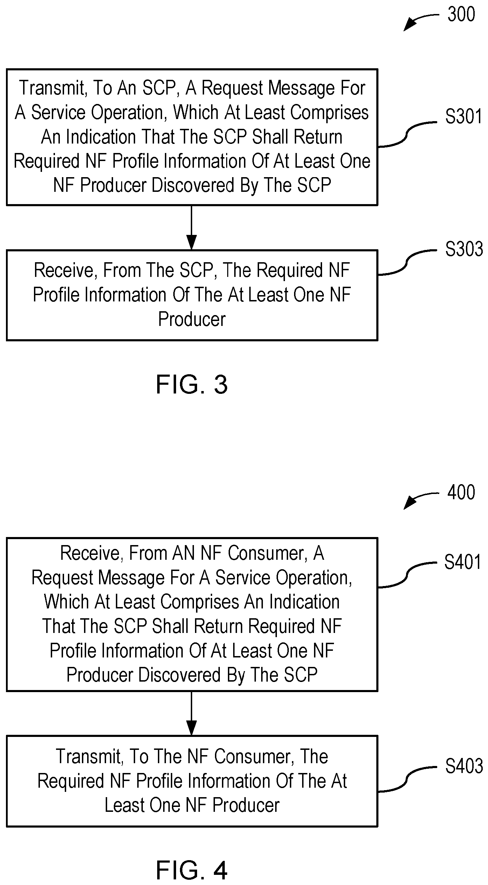

Hereinafter, a method 300 performed by an NF consumer (e.g. for NF delegated discovery and selection) according to an exemplary embodiment of the present disclosure will be described with reference to FIG. 3.

It should be understood that the NF consumer may also be any other appropriate entity that can be configured to perform the method 300 as described below, including a virtualized entity that may be implemented on a cloud.

As shown in FIG. 3, the method 300 may include at least steps S301 and S303.

In step S301, the NF consumer transmits, to an SCP, a request message for a service operation. The request message for the service operation may at least include an indication that the SCP shall (or is to) return required NF profile information of at least one NF producer discovered by the SCP. For example, the indication may be represented by, for example, a parameter "returnInfo", and may be carried in, for example a new HTTP header, an existing HTTP header (e.g. by extending it), or a message body of the request message for the service operation.

Accordingly, in step S303, the NF consumer receives, from the SCP, the required NF profile information of the at least one NF producer. The NF consumer may use the required NF profile information in subsequent procedures.

The request message for the service operation may include a set of mandatory parameters (also called "first set" throughout the specification), in addition to a set of preferred parameters (also called "second set" throughout the specification). In this case, as an exemplary embodiment, the NF consumer may transmit, in the request message for the service operation, to the SCP an indication of an action of the SCP performed when NF producer candidates (discovered by the SCP from the NRF, and matching the first set of mandatory parameters) do not match at least one of the second set of preferred parameters. For example, the indication of the action of the SCP may be represented by a parameter "unmatchAct", and may be carried in, for example, a new HTTP header, an existing HTTP header (e.g. by extending it), or a message body of the request message for the service operation.

The preferred parameters in the set may have priorities that need to be considered in discovery of an NF producer. In an exemplary embodiment, the NF consumer may also transmit, in the request message for the service operation, to the SCP a preferred parameter indication of one or more preferred parameters from the second set. The preferred parameter indication can identify the one or more preferred parameters that are regarded as having the highest priority that needs to be considered. For example, the preferred parameter indication may be represented by a parameter "unmatchParam", and may be carried in, for example, a new HTTP header, an existing HTTP header (e.g. by extending it), or a message body of the request message for the service operation. In this case, the indication of the action of the SCP may indicate the action of the SCP performed when the NF producer candidates do not match at least one of the one or more preferred parameters indicated by the preferred parameter indication.

It may be understood that if there is only one preferred parameter in the second set transmitted in the request message for the service operation, the preferred parameter indication may not be present. In another embodiment, if there is a plurality of preferred parameters in the second set transmitted in the request message for the service operation, absence of the preferred parameter indication can mean that all of the plurality of preferred parameters in the second set has the same priority.

In some embodiments, the indication of the action of the SCP may include at least one of:

- an indication that the SCP shall (or is to) select an NF producer from the NF producer candidates, continue with invocation of the service operation, and include the required NF profile information of the selected NF producer in a message to the NF consumer. For example, in some embodiments, the indication may be represented by a parameter "selectinvoke", and may be carried in, for example, a new HTTP header, an existing HTTP header (by extending), or a message body of the request message for the service operation;

- an indication that the SCP shall (or is to) select an NF producer from the NF producer candidates, and return the required NF profile information of the selected NF producer to the NF consumer without invocation of the service operation. For example, in some embodiments, the indication may be represented by a parameter "selectReturn", and may be carried in, for example, a new HTTP header, an existing HTTP header (by extending), or a message body of the request message for the service operation; or

- an indication that the SCP shall (or is to) return the required NF profile information of the discovered NF producer candidates without selection of an NF producer For example, in some embodiments, the indication may be represented by a parameter "return", and may be carried in, for example, a new HTTP header, an existing HTTP header (by extending), or a message body of the request message for the service operation.

The specific indication of the action of the SCP that is transmitted in the request message for the service operation can depend on requirements of the NF consumer.

In an exemplary embodiment, the NF consumer may also transmit, in the request message for the service operation, to the SCP a matching result indication that the SCP shall (or is to) return, to the NF consumer, a matching result of at least one of the second set of preferred parameters. For example, in some embodiments, the matching result indication may be represented by a parameter "matchResult", and may be carried in, for example, a new HTTP header, an existing HTTP header (by extending), or a message body of the request message for the service operation. For example, the matching result may show whether a preferred parameter is matched or not.

As previously described, in some embodiments, the SCP may retrieve, from the NRF, the NF producer candidates that match the first set of mandatory parameters. Further, the NF producer candidates may match all of the preferred parameters in the second set, in which case no preferred parameter indication may be present and all of the preferred parameters have the same priority that needs to be considered. Alternatively, in some embodiments, the NF producer candidates may match the one or more preferred parameters indicated by the preferred parameter indication.

In such matching cases, the SCP may select an NF producer from the NF producer candidates that match the preferred parameters in the second set or the preferred parameters indicated by the preferred parameter indication. Accordingly, in some embodiments, the selected NF producer matches the preferred parameters in the second set or the preferred parameters indicated by the preferred parameter indication.

In this case, the NF consumer may receive the required NF profile information of the selected NF producer in a response message for the service operation received from the selected NF producer and forwarded by the SCP.

In some embodiments, the response message for the service operation may also include the matching result of at least one of the second set of preferred parameters.

In another exemplary embodiment, the NF producer candidates may not match at least one of the second set or the preferred parameters (in which case no preferred parameter indication may be present and all of the preferred parameters have the same priority that needs to be considered), or at least one of the one or more preferred parameters indicated by the preferred parameter indication.

If the transmitted indication of the action of the SCP indicates that the SCP shall (or is to) select an NF producer from the NF producer candidates, continue with invocation of the service operation, and include the required NF profile information of the selected NF producer in a message to the NF consumer, for example, indicating "selectinvoke", the SCP may follow the indication of the action to select an NF producer from such NF producer candidates. Accordingly, the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication. In this case, the NF consumer may receive the required NF profile information of the selected NF producer in a response message for the service operation received from the selected NF producer and forwarded by the SCP.

Preferably, in some embodiments, the response message for the service operation may also include the matching result of at least one of the second set of preferred parameters.

Alternatively, in some embodiments, if the transmitted indication of the action of the SCP indicates that the SCP shall (or is to) select an NF producer from the NF producer candidates, and return the required NF profile information of the selected NF producer to the NF consumer without invocation of the service operation (e.g., indicating "selectReturn"), or indicates that the SCP shall (or is to) return the required NF profile information of the discovered NF producer candidates without selection of an NF producer (e.g., indicating "return"), in the case where the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication, the SCP may follow the indication of the action to the SCP and may select an NF producer from such NF producer candidates. Accordingly, the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication. In this case, the NF consumer may receive the required NF profile information of the selected NF producer in a failure message for the service operation transmitted by the SCP. It should be understood that the failure message may also include such a failure message that is generated by another SCP in the communication path that does NRF discovery and selection, returned back from the other SCP to the SCP, and is forwarded by the current SCP to the NF consumer.

In some embodiments, the failure message for the service operation may include a cause code of not matching the at least one of the second set of preferred parameters.

Preferably, in some embodiments, the failure message for the service operation may also include the matching result of at least one of the second set of preferred parameters.

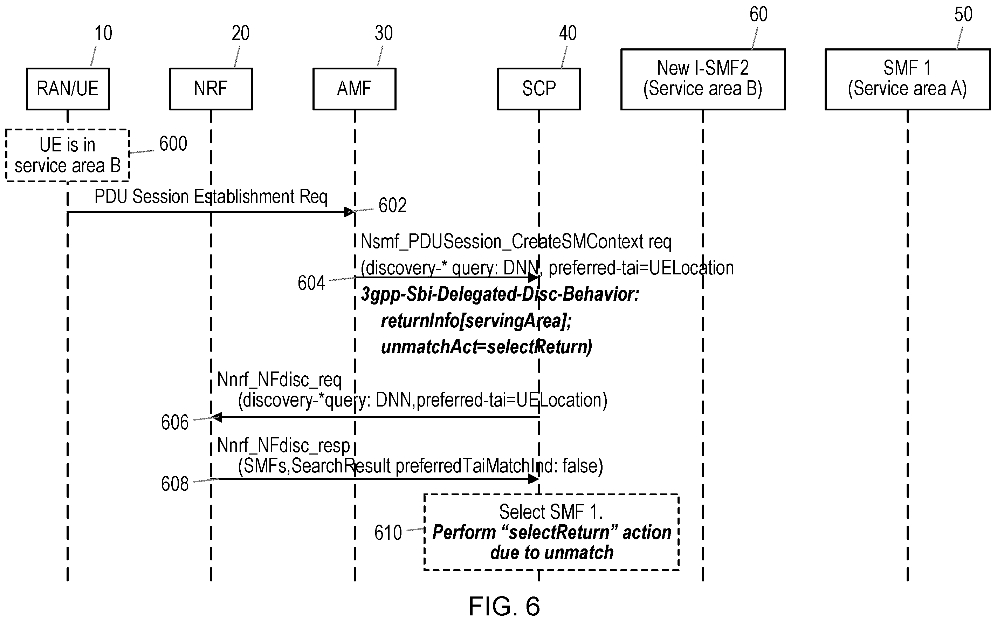

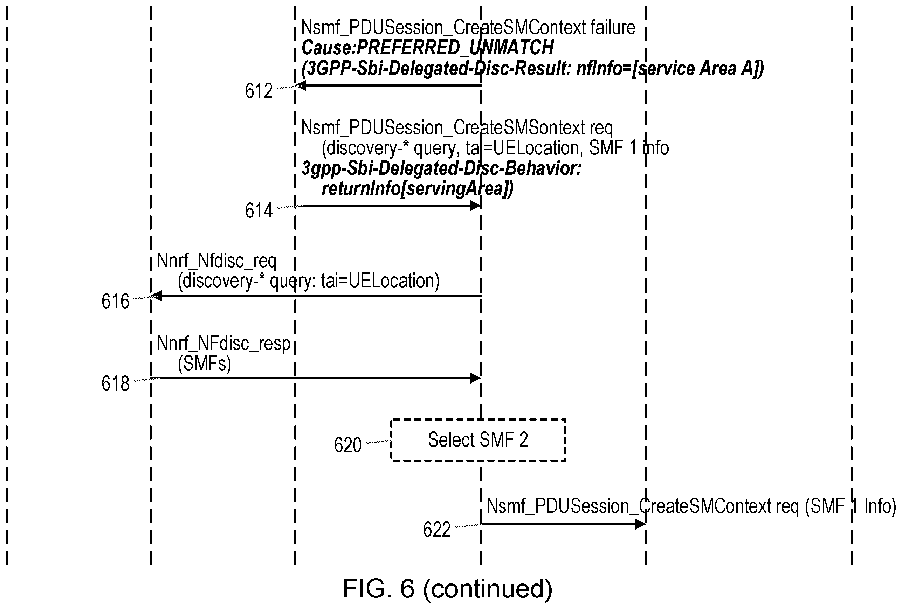

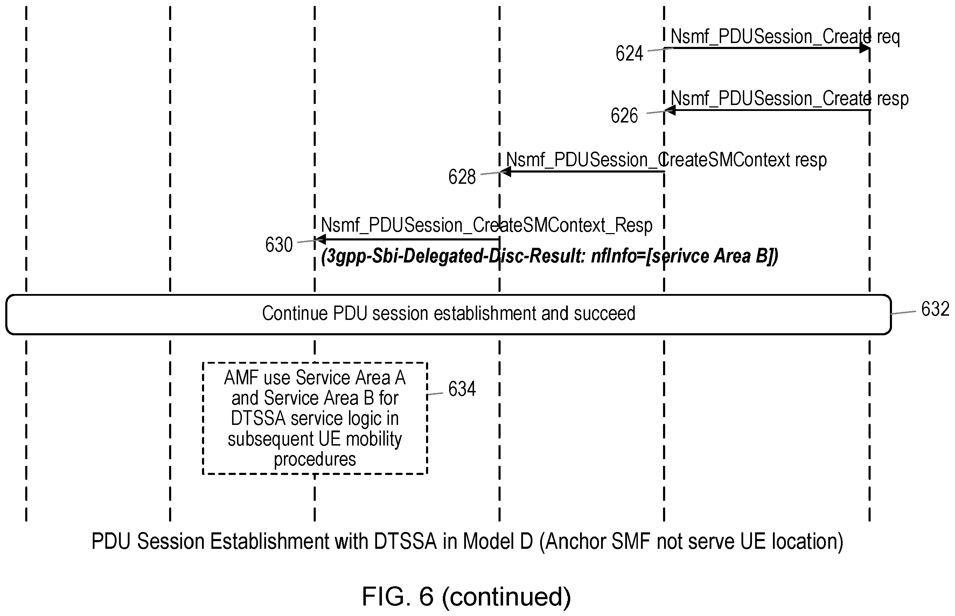

In an exemplary embodiment, the NF consumer may be an AMF, and the NF producer may be an SMF. Accordingly, in some embodiments, the required NF profile information of the discovered NF producer may include a service area of the discovered SMF, and the second set of preferred parameters may include a location of a related UE. The detailed description will be described later in conjunction with FIGS. 5 and 6.

Hereinafter, a method 400 performed by an SCP (e.g. for NF delegated discovery and selection) according to an exemplary embodiment of the present disclosure will be described with reference to **FIG. 4**. It should be understood that the method 400 performed by the SCP corresponds to the method 300 performed by the NF consumer as previously described. Thus, some description of the method 400 may refer to that of method 300, and thus will be omitted for simplicity.

As shown in FIG. 4, the method 400 may include at least steps S401 and S403.

In step S401, the SCP receives, from the NF consumer, a request message for a service operation. The request message for the service operation may at least include an indication that the SCP shall (or is to) return required NF profile information of at least one NF producer discovered by the SCP. For example, the indication may be represented by e.g. a parameter "returnInfo", and may be carried in, for example, a new HTTP header, an existing HTTP header (e.g. by extending it), or a message body of the request message for the service operation.

In step S403, the SCP transmits, to the NF consumer, the required NF profile information of the at least one NF producer.

In some embodiments, the request message for the service operation may include a first set of mandatory parameters, in addition to a second set of preferred parameters. In this case, as an exemplary embodiment, the request message for the service operation received from the NF consumer may also include an indication of an action of the SCP (to be) performed when NF producer candidates (discovered by the SCP from the NRF, and matching the first set of mandatory parameters) do not match at least one of the second set of preferred parameters. For example, the indication of the action of the SCP may be represented by a parameter "unmatchAct", and may be carried in, for example, a new HTTP header, an existing HTTP header (e.g. by extending it), or a message body of the request message for a service operation.

The preferred parameters in the set may have (their) priorities that need to be considered in discovery of an NF producer. In an exemplary embodiment, the NF consumer may also transmit, in the request message for the service operation, to the SCP a preferred parameter indication of one or more preferred parameters from the second set. The preferred parameter indication identifies the one or more preferred parameters that are regarded as having the highest priority that needs to be considered. For example, the preferred parameter indication may be represented by a parameter "unmatchParam", and may be carried in, for example, a new HTTP header, an existing HTTP header (e.g. by extending it), or a message body of the request message for the service operation.

In this case, the indication of the action of the SCP may indicate the action of the SCP performed when the NF producer candidates do not match at least one of the one or more preferred parameters indicated by the preferred parameter indication.

In some embodiments, the indication of the action of the SCP may include at least one of:

- an indication that the SCP shall (or is to) select an NF producer from the NF producer candidates, continue with invocation of the service operation, and include the required NF profile information of the selected NF producer in a message to the NF consumer. For example, in some embodiments, the indication may be represented by a parameter "selectInvoke", and may be carried in, for example, a new HTTP header, an existing HTTP header (e.g. by extending it), or a message body of the request message for the service operation;

- an indication that the SCP shall (or is to) select an NF producer from the NF producer candidates, and return the required NF profile information of the selected NF producer to the NF consumer without invocation of the service operation. For example, in some embodiments, the indication may be represented by a parameter "selectReturn", and may be carried in, for example, a new HTTP header, an existing HTTP header (e.g. by extending it), or a message body of the request message for the service operation; or

- an indication that the SCP shall (or is to) return the required NF profile information of the discovered NF producer candidates without selection of an NF producer. For example, in some embodiments, the indication may be represented by a parameter "return", and may be carried in, for example, a new HTTP header, an existing HTTP header (by extending), or a message body of the request message for the service operation.

The specific Indication of the action of the SCP that is transmitted in the request message for the service operation can depend on requirements of the NF consumer.

In an exemplary embodiment, the request message for the service operation may also include a matching result indication that the SCP shall (or is to) return, to the NF consumer, a matching result of at least one of the second set of preferred parameters. For example, in some embodiments, the matching result indication may be represented by a parameter "matchResult", and may be carried in, for example, a new HTTP header, an existing HTTP header (e.g. by extending it), or a message body of the request message for the service operation. For example, the matching result may show whether a preferred parameter is matched or not.

In some embodiments, the SCP may retrieve, from the NRF, the NF producer candidates that match the first set of mandatory parameters. Further, the NF producer candidates may match all of the preferred parameters in the second set, in which case no preferred parameter indication may be present and all of the preferred parameters have the same priority that needs to be considered. Alternatively, in some embodiments, the NF producer candidates may match the one or more preferred parameters indicated by the preferred parameter indication.

In such matching cases, the SCP may select an NF producer from the NF producer candidates that match the preferred parameters in the second set or the preferred parameters indicated by the preferred parameter indication. Accordingly, in some embodiments, the selected NF producer matches the preferred parameters in the second set or the preferred parameters indicated by the preferred parameter indication.

Then, in some embodiments, the SCP may transmit the required NF profile information of the selected NF producer in a response message for the service operation received from the NF producer and forwarded to the NF consumer.

The response message for the service operation may also include the matching result of at least one of the second set of preferred parameters.

In another exemplary embodiment, the NF producer candidates may not match at least one of the second set or the preferred parameters (in which case no preferred parameter indication may be present and all of the preferred parameters have the same priority that needs to be considered), or at least one of the one or more preferred parameters indicated by the preferred parameter indication.

If the received indication of the action of the SCP indicates that the SCP shall (or is to) select an NF producer from the NF producer candidates, continue with invocation of the service operation, and include the required NF profile information of the selected NF producer in a message to the NF consumer, for example, indicating "selectinvoke", the SCP may follow the indication of the action to select an NF producer from such NF producer candidates. Accordingly, the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication. Then, the SCP may transmit the required NF profile information of the selected NF producer in a response message for the service operation received from the NF producer and forwarded to the NF consumer.

In some embodiments, the response message for the service operation may also include the matching result of at least one of the second set of preferred parameters.

Alternatively, in some embodiments, if the received indication of the action of the SCP indicates that the SCP shall (or is to) select an NF producer from the NF producer candidates, and return the required NF profile information of the selected NF producer to the NF consumer without invocation of the service operation (e.g., indicating "selectReturn"), or indicates that the SCP shall (or is to) return the required NF profile information of the discovered NF producer candidates without selection of an NF producer (e.g., indicating "return"), in the case where the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication, the SCP may follow the indication of the action to select an NF producer from such NF producer candidates. Accordingly, the selected NF producer does not match at least one of the second set or the preferred parameters (in which case no preferred parameter indication may be present and all of the preferred parameters have the same priority that needs to be considered), or at least one of the one or more preferred parameters indicated by the preferred parameter indication. Then, in some embodiments, the SCP may transmit the required NF profile information of the selected NF producer in a failure message for the service operation transmitted by the SCP.

In some embodiments, the failure message for the service operation may include a cause code of not matching the at least one of the second set of preferred parameters.

In some embodiments, the failure message for the service operation may also include the matching result of at least one of the second set of preferred parameters.

As previously described, in an exemplary embodiment, the NF consumer may be an AMF, and the NF producer may be an SMF. Accordingly, in some embodiments, the required NF profile information of the discovered NF producer may include a service area of the discovered SMF, and the second set of preferred parameters may include a location of a related UE. The detailed description will be described later in conjunction with FIGS. 5 and 6.

In the examples of FIGS. 5 and 6, exemplary HTTP Headers named e.g., "3gpp-Sbi-Delegated-Disc-Behavior" and "3gpp-Sbi-Delegated-Disc-Result" are respectively used to carry the indications as described previously. It should be understood that those headers are only described here for illustration but not for any limitation.

For example, the "3gpp-Sbi-Delegated-Disc-Behavior" header may contain the indications to the SCP for NF delegated discovery and selection:

- Returning the required NF profile information of the discovered/selected NF producer; and optionally
- Whether the service operation shall (or is to) be invoked based on the preferred parameter matching result.

The receiving NF may use the header, e.g. to determine whether to accept the request. The encoding of the header may follow the Augmented Backus-Naur Form (ABNF) as defined in Internet Engineering Task Force (IETF) Request for Comments (RFC) 7230.

In some embodiments, a header may be configured as follows:

3gpp-Sbi-Delegated-Disc-Behavior = "3gpp-Sbi-Delegated-Disc-Behavior" ":" parameter [*(";" OWS additionalparameter)])

parameter = "returnInfo" / token

additionalparameter =   "matchResult" / "unmatchAct" / token

The following parameters may be defined only for illustration but not for any limitation:

- "returnInfo": This parameter indicates the SCP is to return the NF profile information of the selected NF producer. The value of this parameter may carry the filter of NF profile contents, i.e. which information element (IE) in the NF profile of the selected NF producer shall (or is to) be returned to the NF consumer. The NF profile can, for example, be as specified in 3GPP TS 29.510, V17.4.0.
- "unmatchParam": This parameter indicates the concerned preferred-matching parameters by the NF consumer. When the NF producer candidates do not match the preferred parameters defined by "unmatchParam", the SCP shall (or is to) take an action according to the value of "unmatchAct".
- "matchResult": This parameter indicates the SCP is to return the preferred-matching result to the NF consumer
- "unmatchAct": This parameter indicates the action of the SCP when the NF producer candidates do not match the preferred parameters defined by "unmatchParam" if present. The possible value can be as follows:

  -- "selectInvoke": This parameter indicates the SCP is to select an NF producer from the NF producer candidates, continue with the service operation invocation, and include the required NF profile information of the selected NF producer in a message to the NF consumer,
  -- "selectReturn": This parameter indicates the SCP is to select an NF producer from the NF producer candidates, and return the required NF profile information of the selected NF producer to the NF consumer without invocation of the service operation,
  -- "return": This parameter indicates the SCP is to return the required NF profile information of the discovered NF producer without NF producer selection.

The "3gpp-Sbi-Delegated-Disc-Result" header may contain the corresponding information of the SCP selected NF producer according to the request from NF consumer:

- Returning the required NF profile information of the discovered/selected NF producer; and optionally
- Preferred parameter matching result.

In some embodiments, a header may be configured as follows:

3gpp-Sbi-Delegated-Disc-Result = "3gpp-Sbi-Delegated-Disc-Result" ":" parameter [*(";" OWS additionalparameter)])

parameter = "nfInfo" / token

additionalparameter =    "matchResult" / token

The following parameters may be defined:

- "nfInfo": The value of this parameter carries the filtered NF profile contents of the selected NF producer, which shall (or is to) be returned to the NF consumer, as specified in 3GPP TS 29.510, V17.4.0.
- "matchResult": The value of this parameter shall (or is to) carry the preferred-matching result, as specified in 3GPP TS 29.510, V17.4.0.

It should be understood that although unmatchAct=selectReturn is described in the examples of FIGS. 5 and 6, unmatchAct=selectInvoke or unmatchAct=return may also be applied as appropriately.

**FIG. 5** schematically shows an exemplary signaling diagram of PDU Session Establishment with DTSSA (in Model D) where Anchor SMF can serve UE location, in which the methods (e.g. for NF delegated discovery and selection) according to exemplary embodiments of the present disclosure are applied. Some description of the exemplary signaling sequence diagram as shown in FIG. 5 may refer to that of methods 300 and 400 as previously described, and thus will be omitted here for simplicity.

In the following description on the exemplary signaling sequence diagram of FIG. 5, AMF is taken as an example of the NF Consumer as previously described, and SMF is taken as an example of the NF Producer as previously described. However, it will be understood that these are merely examples and that, in some embodiments, the NF consumer and the NF producer can be any other type of NF consumer and NF producer respectively.

It should be noted that the description below mainly focuses on signaling related to the methods 300 and 400, and some other signaling is not described in detail to avoid obscuring the principle of the present disclosure. In FIG. 5, modification on the signaling related to the methods 300 and 400 is shown in Bold Italics, in which e.g., Signaling 504 and 516 are involved.

In step 500 of FIG. 5, the UE 10 can be in service area A.

In step 502 of FIG. 5, the UE/Radio Access Network (RAN) 10 may initiate a PDU session establishment towards the AMF 30.

In step 504 of FIG. 5, delegated SMF discovery can be used at PDU session establishment. The AMF 30 may send Nsmf_PDUSession_CreateSMContext Request to the SCP 40, and may include the parameters as defined in clause 6.3.2 of 3GPP TS 23.501 V17.3.0 (e.g. the DNN, required SMF capabilities, preferred TAI) as discovery and selection parameters for an SMF. Additionally, the AMF 30 may include 3gpp-Sbi-Delegated-Disc-Behavior header with returnInfo (e.g. servingAreas and endpoint of selected SMF), unmatchParam (e.g. preferred-tai) and unmatchAct (e.g. selectReturn). Thus, the SCP 40 can receive the Nsmf_PDUSession_CreateSMContext Request from the AMF 30.

In step 506 of FIG. 5, the SCP 40 may send Nnrf_NFdisc_req (with the parameters received from the AMF in step 504) to the NRF 20 to discover an SMF. Thus, the NRF 20 can receive the Nnrf_NFdisc_req from the SCP 40.

In step 508 of FIG. 5, the NRF 20 may find SMFs that can serve both the DNN and (+) preferred-tai. The NRF 20 may return the SMFs serving the DNN+ preferred-tai in Nnrf_NFdisc_resp. That is, the NRF 20 can send Nnrf_NFdisc_resp to the SCP 40. Thus, the SCP 40 can receive the Nnrf_NFdisc_resp from the NRF 20.

In step 510 of FIG. 5, as preferred-tai is matched in the SMF candidates returned by the NRF 20, the SCP 40 may select SMF1 50 from the returned SMFs.

In step 512 of FIG. 5, the SCP 40 may forward the Nsmf_PDUSession_CreateSMContext Request to the selected SMF1 50. Thus, the selected SMF1 50 can receive the Nsmf_PDUSession_CreateSMContext Request from the SCP 40. In step 514 of FIG. 5, the SMF1 50 may send the Nsmf_PDUSession_CreateSMContext Response to the SCP 40.

Thus, the SCP 40 can receive the Nsmf_PDUSession_CreateSMContext Response from the SMF 1 50.

In step 516 of FIG. 5, the SCP 40 may add the 3gpp-Sbi-Delegated-Disc-Result header with serving areas of the selected SMF1 50 into the Nsmf_PDUSession_CreateSMContext Response, and may send it to the AMF 30. Thus, the AMF 30 can receive the Nsmf_PDUSession_CreateSMContext Response from the SCP 40.

In step 518 of FIG. 5, PDU session establishment can be continued and succeed.

In step 520 of FIG. 5, the AMF 30 may use the stored SMF Service Area of the SMF1 50 to determine the need for I-SMF relocation (e.g. change or removal) upon subsequent UE mobility.

**FIG. 6** schematically shows another exemplary signaling diagram of PDU Session Establishment with DTSSA (in Model D) where Anchor SMF cannot serve UE location, in which the methods (e.g. for NF delegated discovery and selection) according to exemplary embodiments of the present disclosure are applied. Some description of the exemplary signaling sequence diagram as shown in FIG. 6 may refer to that of methods 300 and 400 as previously described, and thus will be omitted here for simplicity.

In the following description on the exemplary signaling sequence diagram of FIG. 6, AMF is taken as an example of the NF Consumer as previously described, and SMF is taken as an example of the NF Producer as previously described. However, it will be understood that these are merely examples and that, in some embodiments, the NF consumer and the NF producer can be any other type of NF consumer and NF producer respectively.

It should be noted that the description below mainly focuses on signaling related to the methods 300 and 400, and some other signaling is not described in detail to avoid obscuring the principle of the present disclosure. In FIG. 6, modification on the signaling related to the methods 300 and 400 is shown in Bold Italics, in which e.g., Signaling 604, 610-614, and 630 are involved.

In step 600 of FIG. 6, the UE 10 can be in service area B.

In step 602 of FIG. 6, the UE/RAN 10 may initiate a PDU session establishment towards the AMF 30.

In step 604 of FIG. 6, delegated SMF discovery can be used at PDU session establishment. The AMF 30 may send Nsmf_PDUSession_CreateSMContext Request to the SCP 40, and may include the parameters as defined in Clause 6.3.2 of 3GPP TS 23.501 V17.3.0 (e.g. the DNN, required SMF capabilities, preferred TAI) as discovery and selection parameters for an SMF. Additionally, the AMF 30 may include 3gpp-Sbi-Delegated-Disc-Behavior header with returnInfo (e.g. servingAreas and endpoint of selected SMF), unmatchParam (e.g. preferred-tai) and unmatchAct (e.g. selectReturn). Thus, the SCP 40 can receive the Nsmf_PDUSession_CreateSMContext Request from the AMF 30.

In step 606 of FIG. 6, the SCP 40 may send Nnrf_NFdisc_req (with the parameters received from the AMF in step 604) to the NRF 20 to discover an SMF. Thus, the NRF 20 can receive the Nnrf_NFdisc_req from the SCP 40.

In step 608 of FIG. 6, the NRF 20 may not be able to find an SMF that can serve both the DNN and (+) preferred-tai. The NRF 20 may ignore the preferred-tai and return the SMFs serving the DNN in Nnrf_NFdisc_resp. Thus, the SCP 40 can receive the Nnrf_NFdisc_resp from the NRF 20.

In step 610 of FIG. 6, as preferred-tai is not matched in the SMF candidates returned by the NRF 20, according to the received indications unmatchParam=preferred-tai and unmatchAct=selectReturn, the SCP 40 may select SMF1 50 and generate an error/failure response, which may include the specific cause code value PREFERRED_UNMATCH, and the 3gpp-Sbi-Delegated-Disc-Result header with serving areas and endpoint (e.g. URI) of the selected SMF1 50.

In step 612 of FIG. 6, the SCP 40 may send the error/failure response to the AMF 30. Thus, the AMF 30 can receive the error/failure response from the SCP 40.

In step 614 of FIG. 6, based on received error/failure response, the AMF 30 may generate a Nsmf_PDUSession_CreateSMContext Request which includes the parameters as defined in clause 5.34.3 of 3GPP TS 23.501 V17.3.0 (e.g. the endpoint (e.g. URI) of the selected SMF, TAI) as discovery and selection parameters for I-SMF, and may additionally include the 3gpp-Sbi-Delegated-Disc-Behavior header with returnInfo (e.g. servingArea). The AMF 30 may send the Nsmf_PDUSession_CreateSMContext Request to the SCP 40. Thus, the SCP 40 can receive the Nsmf_PDUSession_CreateSMContext Request from the AMF 30.

In step 616 of FIG. 6, the SCP 40 may send Nnrf_NFdisc_req (with the parameters received form AMF in step 614) to the NRF 20 to discover the I-SMF. Thus, the NRF 20 can receive the Nnrf_NFdisc_req from the SCP 40.

In step 618 of FIG. 6, the NRF 20 may return (an indication of) the I-SMFs that can serve the TAI (UE location). Thus, the SCP 40 can receive (an indication of) these I-SMFs from the NRF 20.

In step 620 of FIG. 6, the SCP may select one I-SMF2 60.

In step 622 of FIG. 6, the SCP 40 may forward the Nsmf_PDUSession_CreateSMContext Request with SMF1 50 info (e.g. endpoint of SMF1 50) to the selected I-SMF2 60. Thus, the selected I-SMF2 60 can receive the Nsmf_PDUSession_CreateSMContext Request from the SCP 40.

In step 624 of FIG. 6, the I-SMF2 60 may send the Nsmf_PDUSession_Create Request to the SMF1 50. Thus, the SMF1 50 can receive the Nsmf_PDUSession_Create Request from the I-SMF2 60.

In step 626 of FIG. 6, the SMF1 50 may send the Nsmf_PDUSession_Create Response to the I-SMF2 60. Thus, the I-SMF2 60 can receive the Nsmf_PDUSession_Create Response from the SMF1 50. In step 628 of FIG. 6, the I-SMF2 60 may send the Nsmf_PDUSession_CreateSMContext Response to the SCP 40. Thus, the SCP 40 can receive the Nsmf_PDUSession_CreateSMContext Response from the I-SMF2 60.

In step 630 of FIG. 6 the SCP 40 may add the 3gpp-Sbi-Delegated-Disc-Result header with serving areas of the selected I-SMF2 60 into the Nsmf_PDUSession_CreateSMContext Response, and may send it to the AMF 30. Thus, the AMF 30 can receive the Nsmf_PDUSession_CreateSMContext Response from the SCP 40.

In step 632 of FIG. 6, PDU session establishment can be continued and succeed.

In step 634 of FIG. 6, the AMF 30 may use the stored SMF Service Area of the I-SMF2 60 and SMF1 50 to determine the need for I-SMF relocation (e.g. change or removal) upon subsequent UE mobility.

It is thus proposed that the NF consumer may provide an indication for the SCP to provide required NF profile information of discovered NF producers or an NF producer selected from the discovered NF producers, so that the NF consumer may use the required NF profile information. For example, the AMF (as an example of the NF consumer) may provide an indication for the SCP to provide serving area information of the selected SMF (as an example of the NF producer), so that the AMF may use the serving area information of the selected SMF for DTSSA scenarios. Accordingly, the SCP shall (or is to) return the required NF profile information of the discovered NF producers or the NF producer selected from the discovered NF producers, in positive or negative responses.

It is proposed that the NF consumer may provide preferred parameters with an indication on the SCP behavior upon a preferred parameter matching result. For example, the AMF may provide "preferred-tai" as a preferred parameter, and an indication that the SCP shall not (or is not to) invoke a Create_SM_Context operation on the selected anchor SMF if the selected anchor SMF does not match "preferred-tai". Accordingly, the SCP behaves according to the indication based on the preferred parameter matching result. For example, if the indication says to "not proceed with unmatched result", the SCP may select the NF producer and return the required information of the selected NF producer to the NF consumer (with suitable cause code).

The indications above may be carried in a new Hyper Text Transfer Protocol (HTTP) header or extending existing HTTP header or in a message body.

In addition, when the NF consumer receives the information of the NF producer from the SCP, the NF consumer may pass the information to another NF consumer if needed to support another NF consumer service logic. For example, an old AMF may pass the serving area of the SMF(s) to a new AMF.

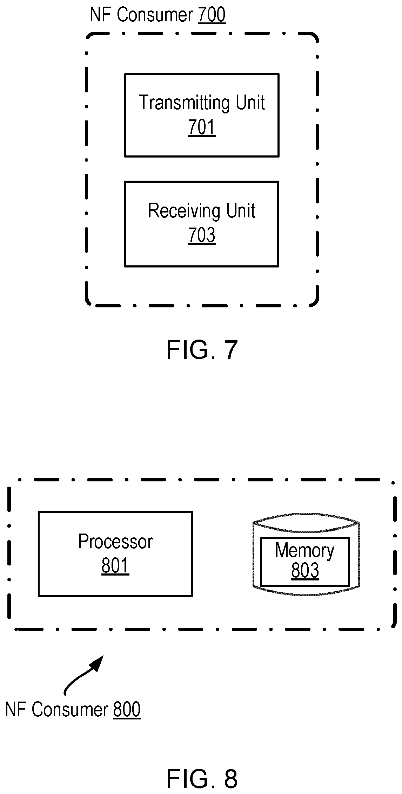

Hereinafter, a structure of an NF consumer according to an exemplary embodiment of the present disclosure will be described with reference to FIG. 7.

**FIG. 7** schematically shows a block diagram of the NF consumer 700 according to an exemplary embodiment of the present disclosure. The NF consumer 700 in FIG. 7 may perform the method 300 with reference to FIG. 3 and signaling sequence diagrams with reference to FIGS. 5 and 6. Accordingly, some detailed description on the NF consumer 700 may refer to the corresponding description of the method 300 as shown in FIG. 3 in conjunction with the signaling sequence diagrams as shown in FIGS. 5 and 6, and thus will be omitted here for simplicity.

As shown in FIG. 7, the NF consumer 700 may include at least a transmitting unit 701 and a receiving unit 703.

The transmitting unit 701 may be configured to transmit, to an SCP, a request message for a service operation, which at least includes an indication that the SCP shall (or is to) return required NF profile information of at least one NF producer discovered by the SCP.

Accordingly, the receiving unit 703 may be configured to receive, from the SCP, the required NF profile information of the at least one NF producer.

In an exemplary embodiment, the request message for the service operation can further include: a first set of mandatory parameters and a second set of preferred parameters, and an indication of an action of the SCP performed when NF producer candidates, which are discovered by the SCP from an NRF and match the first set of mandatory parameters, do not match at least one of the second set of preferred parameters.

In an exemplary embodiment, the request message for the service operation can further include: a preferred parameter indication of one or more preferred parameters in the second set, wherein the indication of the action of the SCP indicates the action of the SCP performed when the NF producer candidates do not match at least one of the one or more preferred parameters indicated by the preferred parameter indication.

In an exemplary embodiment, the indication of the action of the SCP can include at least one of:

an indication that the SCP selects an NF producer from the NF producer candidates, continues with invocation of the service operation, and includes the required NF profile information of the selected NF producer in a message to the NF consumer,
an indication that the SCP selects an NF producer from the NF producer candidates, and returns the required NF profile information of the selected NF producer to the NF consumer without invocation of the service operation, or
an indication that the SCP returns the required NF profile information of the discovered NF producer candidates without selection of an NF producer.

In an exemplary embodiment, the request message for the service operation can further include: a matching result indication that the SCP shall (or is to) return, to the NF consumer, a matching result of at least one of the second set of preferred parameters.

In an exemplary embodiment, the NF producer may be selected from NF producer candidates that match the one or more preferred parameters indicated by the preferred parameter indication, and said receiving may further include: receiving the required NF profile information of the selected NF producer in a response message for the service operation received from the selected NF producer and forwarded by the SCP.

In an exemplary embodiment, the NF producer may be selected from the NF producer candidates that do not match the at least one of the one or more preferred parameters indicated by the preferred parameter indication, and said receiving may further include: receiving the required NF profile information of the selected NF producer in a response message for the service operation received from the NF producer and forwarded by the SCP.

In an exemplary embodiment, the response message for the service operation received from the NF producer and forwarded by the SCP can further include: the matching result of the at least one of the second set of preferred parameters.

In an exemplary embodiment, the NF producer may be selected from the NF producer candidates that do not match the at least one of the one or more preferred parameters indicated by the preferred parameter indication, and said receiving may further include: receiving the required NF profile information of the selected NF producer in a failure message for the service operation, which further includes a cause code of not matching the at least one of the second set of preferred parameters.

In an exemplary embodiment, the failure message for the service operation can further include: the matching result of the at least one of the second set of preferred parameters.

In an exemplary embodiment, at least one of the indication that the SCP shall (or is to) return the required NF profile information, the indication of the action of the SCP, the preferred parameter indication, or the matching result indication may be carried in one of:

a new HTTP header,
an existing HTTP header, or
a message body of the corresponding message.

In an exemplary embodiment, the NF consumer can be an AMF, and the NF producer can be an SMF, wherein the required NF profile information of the discovered NF producer may include a service area of the discovered SMF, and the second set of preferred parameters may include a location of a related UE.

Hereinafter, a structure of an NF consumer according to another exemplary embodiment of the present disclosure will be described with reference to FIG. 8.

**FIG. 8** schematically shows a block diagram of an NF consumer 800 according to an exemplary embodiment of the present disclosure. The NF consumer 800 in FIG. 8 may perform the method 300 with reference to FIG. 3 and signaling sequence diagrams with reference to FIGS. 5 and 6. Accordingly, some detailed description on the NF consumer 800 may refer to the corresponding description of the method 300 as shown in FIG. 3 in conjunction with the signaling sequence diagrams as shown in FIGS. 5 and 6, and thus will be omitted here for simplicity.

As shown in FIG. 8, the NF consumer 800 includes at least one processor 801 and optionally at least one memory 803. The at least one processor 801 includes e.g., any suitable Central Processing Unit (CPU), microcontroller, Digital Signal Processor (DSP), etc., capable of executing computer program instructions. The at least one memory 803 may be any combination of a Random Access Memory (RAM) and a Read Only Memory (ROM). The at least one memory 803 may also include persistent storage, which, for example, can be any single one or combination of magnetic memory, optical memory, or solid state memory or even remotely mounted memory.

The at least one memory 803 stores instructions executable by the at least one processor 801. The instructions, when loaded from the at least one memory 803 and executed on the at least one processor 801, may cause the NF consumer 800 to perform the actions, e.g., of the procedures as described earlier in conjunction with FIGS. 3, 5 and 6, and thus will be omitted here for simplicity.

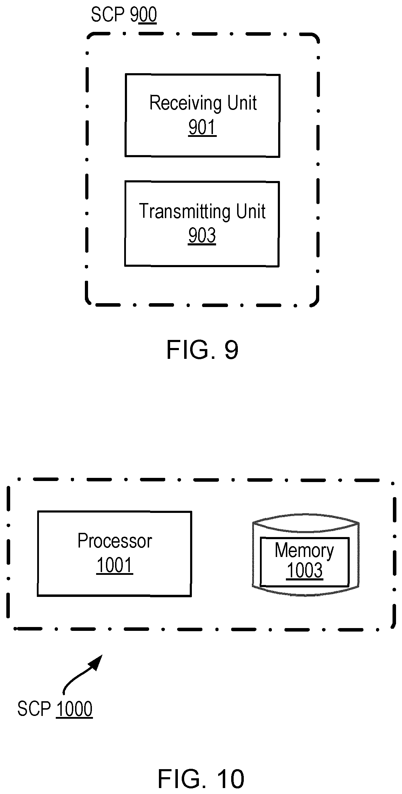

Hereinafter, a structure of an SCP according to an exemplary embodiment of the present disclosure will be described with reference to FIG. 9.

**FIG. 9** schematically shows a block diagram of the SCP 900 according to an exemplary embodiment of the present disclosure. The SCP 900 in FIG. 9 may perform the method 400 as described previously with reference to FIG. 4 and signaling sequence diagrams with reference to FIGS. 5 and 6. Accordingly, some detailed description on the SCP 900 may refer to the corresponding description of the method 400 in FIG. 4 in conjunction with the signaling sequence diagrams as shown in FIGS. 5 and 6, and thus will be omitted here for simplicity.

As shown in FIG. 9, the SCP 900 may include at least a receiving unit 901 and a transmitting unit 903.

The receiving unit 901 may be configured to receive, from an NF consumer, a request message for a service operation, which at least includes an indication that the SCP shall (or is to) return required NF profile information of at least one NF producer discovered by the SCP.

Accordingly, the transmitting unit 903 may be configured to transmit, to the NF consumer, the required NF profile information of the at least one NF producer.

In an exemplary embodiment, the request message for the service operation can further include: a first set of mandatory parameters and a second set of preferred parameters, and an indication of an action of the SCP performed when NF producer candidates, which are discovered by the SCP from an NRF and match the first set of mandatory parameters, do not match at least one of the second set of preferred parameters.

In an exemplary embodiment, the request message for the service operation can further includes a preferred parameter indication of one or more preferred parameters in the second set, wherein the indication of the action of the SCP indicates the action of the SCP performed when the NF producer candidates do not match at least one of the one or more preferred parameters indicated by the preferred parameter indication.

In an exemplary embodiment, the indication of the action of the SCP can include at least one of:

an indication that the SCP selects an NF producer from the NF producer candidates, continues with invocation of the service operation, and includes the required NF profile information of the selected NF producer in a message to the NF consumer,
an indication that the SCP selects an NF producer from the NF producer candidates, and returns the required NF profile information of the selected NF producer to the NF consumer without invocation of the service operation, or
an indication that the SCP returns the required NF profile information of the discovered NF producer candidates without selection of an NF producer.

In an exemplary embodiment, the request message for the service operation can further include: a matching result indication that the SCP shall (or is to) return, to the NF consumer, a matching result of at least one of the second set of preferred parameters.

In an exemplary embodiment, the receiving unit 901 may be further configured to receive, from the NRF, NF producer candidates that match the one or more preferred parameters indicated by the preferred parameter indication.

The SCP 900 may further include a selection unit (not shown), which may be configured to select the NF producer from the NF producer candidates. The transmitting unit 903 may be further configured to transmit the required NF profile information of the selected NF producer in a response message for the service operation received from the selected NF producer and forwarded to the NF consumer.

In an exemplary embodiment, the receiving unit 901 may be further configured to receive, from the NRF, the NF producer candidates that do not match the at least one of the one or more preferred parameters indicated by the preferred parameter indication. The selection unit may be further configured to select the NF producer from the NF producer candidates. The transmitting unit 903 may be further configured to transmit the required NF profile information of the selected NF producer in a response message for the service operation received from the NF producer and forwarded to the NF consumer.

In an exemplary embodiment, the response message for the service operation received from the NF producer and forwarded to the NF consumer can further include: the matching result of the at least one of the second set of preferred parameters.

In an exemplary embodiment, the receiving unit 901 may be further configured to receive, from the NRF, the NF producer candidates that do not match the at least one of the one or more preferred parameters indicated by the preferred parameter indication. The selection unit may be further configured to select the NF producer from the NF producer candidates, according to the indication of the action of the SCP. The transmitting unit 903 may be further configured to transmit the required NF profile information of the selected NF producer in a failure message for the service operation, which can further include a cause code of not matching the at least one of the second set of preferred parameters.

In an exemplary embodiment, the failure message for the service operation can further include: the matching result of the at least one of the second set of preferred parameters.

In an exemplary embodiment, at least one of the indication that the SCP shall (or is to) return the required NF profile information, the indication of the action of the SCP, the preferred parameter indication, or the matching result indication can be carried in one of:

a new HTTP header,
an existing HTTP header, or
a message body of the corresponding message.

In an exemplary embodiment, the NF consumer can be an AMF, and the NF producer can be an SMF, wherein the required NF profile information of the discovered NF producer may include a service area of the discovered SMF, and the second set of preferred parameters may include a location of a related UE.

Hereinafter, a structure of an SCP according to another exemplary embodiment of the present disclosure will be described with reference to FIG. 10.

**FIG. 10** schematically shows a block diagram of an SCP 1000 according to an exemplary embodiment of the present disclosure. The SCP 1000 in FIG. 10 may perform the method 400 with reference to FIG. 4 and signaling sequence diagrams with reference to FIGS. 5 and 6. Accordingly, some detailed description on the SCP 1000 may refer to the corresponding description of the method 400 as shown in FIG. 4 in conjunction with the signaling sequence diagrams as shown in FIGS. 5 and 6, and thus will be omitted here for simplicity.

As shown in FIG. 10, the SCP 1000 includes at least one processor 1001 and optionally at least one memory 1003. The at least one processor 1001 includes e.g., any suitable CPU, microcontroller, DSP, etc., capable of executing computer program instructions. The at least one memory 1003 may be any combination of a RAM and a ROM. The at least one memory 1003 may also include persistent storage, which, for example, can be any single one or combination of magnetic memory, optical memory, or solid state memory or even remotely mounted memory.

The at least one memory 1003 stores instructions executable by the at least one processor 1001. The instructions, when loaded from the at least one memory 1003 and executed on the at least one processor 1001, may cause the SCP 1000 to perform the actions, e.g., of the procedures as described earlier in conjunction with FIGS. 4, 5 and 6, and thus will be omitted here for simplicity.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program.

The computer program includes: code/computer readable instructions, which when executed by the at least one processor 801 causes the NF consumer 800 to perform the actions, e.g., of the procedures described earlier in conjunction with FIGS. 3, 5 and 6; and/or code/computer readable instructions, which when executed by the at least one processor 1001 causes the SCP 1000 to perform the actions, e.g., of the procedures described earlier respectively in conjunction with FIGS. 4, 5 and 6.

The computer program product may be configured as a computer program code structured in computer program modules. The computer program modules could essentially perform the actions of the flow illustrated in any of FIGS. 3 to 6.

The processor may be a single CPU, but could also include two or more processing units. For example, the processor may include general purpose microprocessors; instruction set processors and/or related chips sets and/or special purpose microprocessors such as Application Specific Integrated Circuit (ASICs). The processor may also include board memory for caching purposes. The computer program may be carried by a computer program product connected to the processor. The computer program product may include a non-transitory computer readable storage medium on which the computer program is stored. For example, the computer program product may be a flash memory, a Random-access memory (RAM), a Read-Only Memory (ROM), or an EEPROM, and the computer program modules described above could, in alternative embodiments, be distributed on different computer program products in the form of memories.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the present disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to

**EP 4 490 900 B1**

produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the present disclosure may also be written in conventional procedural programming languages, such as the "C" programming language. The program code may execute entirely on a user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and sub-combination of these embodiments. Accordingly, all embodiments can be combined in any way and/or combination, and the present specification, including the drawings, shall be construed to constitute a complete written description of all combinations and sub-combinations of the embodiments described herein, and of the manner and process of making and using them, and shall support claims to any such combination or sub-combination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings.

**Claims**

1. A method (300) performed by a Network Function, NF, consumer, the method comprising:

   transmitting (S301), to a Service Communication Proxy, SCP, a request message for a service operation, wherein the request message for the service operation at least comprises an indication that the SCP shall return required NF profile information of at least one NF producer discovered by the SCP; and
   receiving (S303), from the SCP, the required NF profile information of the at least one NF producer,
   **characterized in that** the request message for the service operation further comprises:

   a first set of mandatory parameters and a second set of preferred parameters; and
   an indication of an action of the SCP performed when NF producer candidates, which are discovered by the SCP from a Network Repository Function, NRF, and which match the first set of mandatory parameters, do not match at least one of the second set of preferred parameters.

2. The method (300) of claim 1, wherein the request message for the service operation further comprises:

   a preferred parameter indication of one or more preferred parameters in the second set,
   wherein the indication of the action of the SCP indicates the action of the SCP performed when the NF producer candidates do not match at least one of the one or more preferred parameters indicated by the preferred parameter indication.

3. The method (300) of claim 1 or 2, wherein the indication of the action of the SCP comprises at least one of:

   an indication that the SCP selects an NF producer from the NF producer candidates, continues with invocation of the service operation, and includes the required NF profile information of the selected NF producer in a message to the NF consumer;
   an indication that the SCP selects an NF producer from the NF producer candidates, and returns the required NF profile information of the selected NF producer to the NF consumer without invocation of the service operation; or
   an indication that the SCP returns the required NF profile information of the discovered NF producer candidates

23

without selection of an NF producer.

4.   The method (300) of claim 3 when dependent on claim 2, wherein:

the NF producer is selected from NF producer candidates that match the one or more preferred parameters indicated by the preferred parameter indication and said receiving further comprises receiving the required NF profile information of the selected NF producer in a response message for the service operation received from the selected NF producer and forwarded by the SCP; or
the NF producer is selected from the NF producer candidates that do not match at least one of the one or more preferred parameters indicated by the preferred parameter indication and said receiving further comprises receiving the required NF profile information of the selected NF producer in a response message for the service operation received from the NF producer and forwarded by the SCP.

5.   The method (300) of claim 3 when dependent on claim 2, wherein:
the NF producer is selected from the NF producer candidates that do not match at least one of the one or more preferred parameters indicated by the preferred parameter indication and said receiving further comprises receiving the required NF profile information of the selected NF producer in a failure message for the service operation, wherein the failure message for the service operation further comprises a cause code of not matching the at least one of the second set of preferred parameters.

6.   The method (300) of any of claims 1 to 5, wherein the request message for the service operation further comprises:
a matching result indication that the SCP shall return, to the NF consumer, a matching result of at least one of the second set of preferred parameters.

7.   The method (300) of claim 6 when dependent on claim 4, wherein the response message for the service operation received from the NF producer and forwarded by the SCP further comprises:
the matching result of the at least one of the second set of preferred parameters.

8.   The method (300) of claim 6 when dependent on claim 5, wherein the failure message for the service operation further comprises:
the matching result of the at least one of the second set of preferred parameters.

9.   A method (400) performed by a Service Communication Proxy, SCP, , the method comprising:

receiving (S401), from a Network Function, NF, consumer, a request message for a service operation, wherein the request message for the service operation at least comprises an indication that the SCP shall return required NF profile information of at least one NF producer discovered by the SCP; and
transmitting (S403), to the NF consumer, the required NF profile information of the at least one NF producer, **characterized in that** the request message for the service operation further comprises:

a first set of mandatory parameters and a second set of preferred parameters; and
an indication of an action of the SCP performed when NF producer candidates, which are discovered by the SCP from a Network Repository Function, NRF, and which match the first set of mandatory parameters, do not match at least one of the second set of preferred parameters.

10.   The method (400) of claim 9, wherein the request message for the service operation further comprises:

a preferred parameter indication of one or more preferred parameters in the second set,
wherein the indication of the action of the SCP indicates the action of the SCP performed when the NF producer candidates do not match at least one of the one or more preferred parameters indicated by the preferred parameter indication.

11.   The method (400) of claim 9 or 10, wherein the indication of the action of the SCP comprises at least one of:

an indication that the SCP selects an NF producer from the NF producer candidates, continues with invocation of the service operation, and includes the required NF profile information of the selected NF producer in a message to the NF consumer;
an indication that the SCP selects an NF producer from the NF producer candidates, and returns the required NF profile information of the selected NF producer to the NF consumer without invocation of the service operation; or an indication that the SCP returns the required NF profile information of the discovered NF producer candidates without selection of an NF producer.

12. The method (400) of claim 11 when dependent on claim 10, further comprising:

receiving, from the NRF, NF producer candidates that match the one or more preferred parameters indicated by the preferred parameter indication and selecting the NF producer from the NF producer candidates, wherein said transmitting further comprises transmitting the required NF profile information of the selected NF producer in a response message for the service operation received from the selected NF producer and forwarded to the NF consumer; or

receiving, from the NRF, the NF producer candidates that do not match the at least one of the one or more preferred parameters indicated by the preferred parameter indication and selecting the NF producer from the NF producer candidates, wherein said transmitting further comprises transmitting the required NF profile information of the selected NF producer in a response message for the service operation received from the NF producer and forwarded to the NF consumer.

13. The method (400) of claim 11 when dependent on claim 10, further comprising:
receiving, from the NRF, the NF producer candidates that do not match the at least one of the one or more preferred parameters indicated by the preferred parameter indication and selecting the NF producer from the NF producer candidates, according to the indication of the action of the SCP, wherein said transmitting further comprises transmitting the required NF profile information of the selected NF producer in a failure message for the service operation, where the failure message for the service operation further comprises a cause code of not matching the at least one of the second set of preferred parameters.

14. The method (400) of any of claims 9 to 13, wherein the request message for the service operation further comprises:
a matching result indication that the SCP shall return, to the NF consumer, a matching result of at least one of the second set of preferred parameters.

15. The method (400) of claim 14 when dependent on claim 12, wherein the response message for the service operation received from the NF producer and forwarded to the NF consumer further comprises:
the matching result of the at least one of the second set of preferred parameters.

16. The method (400) of claim 14, when dependent on claim 13, wherein the failure message for the service operation further comprises:
the matching result of the at least one of the second set of preferred parameters.

17. A Network Function, NF, consumer (800), comprising at least one processor (801) configured to operate in accordance with any of claims 1 to 8.

18. A Service Communication Proxy, SCP (1000), comprising at least one processor (1001) configured to operate in accordance with any of claims 9 to 16.

19. A computer program comprising instructions which, when executed by at least one processor, cause the at least one processor to perform the method according to any of claims 1 to 8 and/or any of claims 9 to 16.

**Patentansprüche**

1. Verfahren (300), das von einem Netzwerkfunktionsverbraucher, NF-Verbraucher, durchgeführt wird, wobei das Verfahren Folgendes umfasst:

Senden (S301) einer Anforderungsnachricht für eine Dienstoperation an einen Dienstkommunikationsproxy, SCP, wobei die Anforderungsnachricht für die Dienstoperation mindestens eine Angabe umfasst, dass der SCP erforderliche NF-Profilinformationen mindestens eines NF-Erzeugers zurücksenden soll, der von dem SCP ermittelt wird; und
Empfangen (S303) der erforderlichen NF-Profilinformationen des mindestens einen NF-Erzeugers von dem SCP,

**dadurch gekennzeichnet, dass**

die Anforderungsnachricht für die Dienstoperation ferner Folgendes umfasst:

einen ersten Satz von obligatorischen Parametern und einen zweiten Satz von bevorzugten Parametern; und

eine Angabe einer Aktion des SCP, die durchgeführt wird, wenn NF-Erzeugerkandidaten, die von dem SCP aus einer Netzwerk-Repository-Funktion, NRF, ermittelt werden und die mit dem ersten Satz von obligatorischen Parameter übereinstimmen, nicht mit mindestens einem des zweiten Satzes von bevorzugten Parametern übereinstimmen.

2. Verfahren (300) nach Anspruch 1, wobei die Anforderungsnachricht für die Dienstoperation ferner Folgendes umfasst:

eine Angabe bevorzugter Parameter eines oder mehrerer bevorzugter Parameter in dem zweiten Satz, wobei die Angabe der Aktion des SCP die Aktion des SCP angibt, die durchgeführt wird, wenn die NF-Erzeugerkandidaten nicht mit mindestens einem des einen oder der mehreren bevorzugten Parameter übereinstimmen, die durch die Angabe bevorzugter Parameter angegeben sind.

3. Verfahren (300) nach Anspruch 1 oder 2, wobei die Angabe der Aktion des SCP mindestens eines von Folgenden umfasst:

eine Angabe, dass der SCP einen NF-Erzeuger aus den NF-Erzeugerkandidaten auswählt, mit dem Aufruf der Dienstoperation fortfährt und die erforderlichen NF-Profilinformationen des ausgewählten NF-Erzeugers in eine Nachricht an den NF-Verbraucher aufnimmt;

eine Angabe, dass der SCP einen NF-Erzeuger aus den NF-Erzeugerkandidaten auswählt und ohne Aufruf der Dienstoperation die erforderlichen NF-Profilinformationen des ausgewählten NF-Erzeugers an den NF-Verbraucher zurücksendet; oder

eine Angabe, dass der SCP die erforderlichen NF-Profilinformationen des ermittelten NF-Erzeugers ohne Auswahl eines NF-Erzeugers zurücksendet.

4. Verfahren (300) nach Anspruch 3, wenn abhängig von Anspruch 2, wobei:

der NF-Erzeuger aus NF-Erzeugerkandidaten ausgewählt wird, die mit dem einen oder den mehreren bevorzugten Parameter übereinstimmen, die durch die Angabe bevorzugter Parameter angegeben sind, und das Empfangen ferner Empfangen der erforderlichen NF-Profilinformationen des ausgewählten NF-Erzeugers in einer Antwortnachricht für die Dienstoperation umfasst, die von dem ausgewählten NF-Erzeuger empfangen und von dem SCP weitergeleitet wird; oder

der NF-Erzeuger aus den NF-Erzeugerkandidaten ausgewählt wird, die nicht mit mindestens einem des einen oder der mehreren bevorzugten Parameter übereinstimmen, die durch die Angabe bevorzugter Parameter angegeben sind, und das Empfangen ferner Empfangen der erforderlichen NF-Profilinformationen des ausgewählten NF-Erzeugers in einer Antwortnachricht für die Dienstoperation umfasst, die von dem ausgewählten NF-Erzeuger empfangen und von dem SCP weitergeleitet wird.

5. Verfahren (300) nach Anspruch 3, wenn abhängig von Anspruch 2, wobei:

der NF-Erzeuger aus den NF-Erzeugerkandidaten ausgewählt wird, die nicht mit mindestens einem des einen oder der mehreren bevorzugten Parameter übereinstimmen, die durch die Angabe bevorzugter Parameter angegeben sind, und das Empfangen ferner Empfangen der erforderlichen NF-Profilinformationen des ausgewählten NF-Erzeugers in einer Fehlernachricht für die Dienstoperation umfasst, wobei die Fehlernachricht für die Dienstoperation ferner einen Ursachencode hinsichtlich der Nichtübereinstimmung mit dem mindestens einen des zweiten Satzes von bevorzugten Parametern umfasst.

6. Verfahren (300) nach Anspruch 1 bis 5, wobei die Anforderungsnachricht für die Dienstoperation ferner Folgendes umfasst:
eine Übereinstimmungsergebnisangabe, dass der SCP ein Übereinstimmungsergebnis mindestens eines des zweiten Satzes von bevorzugten Parametern an den NF-Verbraucher zurücksenden soll.

7. Verfahren (300) nach Anspruch 6, wenn abhängig von Anspruch 4, wobei die Antwortnachricht für die Dienstoperation, die von dem NF-Erzeuger empfangen und von dem SCP weitergeleitet wird, ferner Folgendes umfasst:

das Übereinstimmungsergebnis des mindestens einen des zweiten Satzes von bevorzugten Parametern.

8. Verfahren (300) nach Anspruch 6, wenn abhängig von Anspruch 5, wobei die Fehlernachricht für die Dienstoperation ferner Folgendes umfasst:

das Übereinstimmungsergebnis des mindestens einen des zweiten Satzes von bevorzugten Parametern.

9. Verfahren (400), das von einem Dienstkommunikationsproxy, SCP, durchgeführt wird, wobei das Verfahren Folgendes umfasst:

Empfangen (S401) einer Anforderungsnachricht für eine Dienstoperation von einem Netzwerkfunktionsverbraucher, NF-Verbraucher, wobei die Anforderungsnachricht für die Dienstoperation mindestens eine Angabe umfasst, dass der SCP erforderliche NF-Profilinformationen mindestens eines NF-Erzeugers zurücksenden soll, der von dem SCP ermittelt wird; und
Senden (S403) der erforderlichen NF-Profilinformationen des mindestens einen NF-Erzeugers an den NF-Verbraucher,
**dadurch gekennzeichnet, dass**
die Anforderungsnachricht für die Dienstoperation ferner Folgendes umfasst:

einen ersten Satz von obligatorischen Parametern und einen zweiten Satz von bevorzugten Parametern; und
eine Angabe einer Aktion des SCP, die durchgeführt wird, wenn NF-Erzeugerkandidaten, die von dem SCP aus einer Netzwerk-Repository-Funktion, NRF, ermittelt werden und die mit dem ersten Satz von obligatorischen Parameter übereinstimmen, nicht mit mindestens einem des zweiten Satzes von bevorzugten Parametern übereinstimmen.

10. Verfahren (400) nach Anspruch 9, wobei die Anforderungsnachricht für die Dienstoperation ferner Folgendes umfasst:

eine Angabe bevorzugter Parameter eines oder mehrerer bevorzugter Parameter in dem zweiten Satz,
wobei die Angabe der Aktion des SCP die Aktion des SCP angibt, die durchgeführt wird, wenn die NF-Erzeugerkandidaten nicht mit mindestens einem des einen oder der mehreren bevorzugten Parameter übereinstimmen, die durch die Angabe bevorzugter Parameter angegeben sind.

11. Verfahren (400) nach Anspruch 9 oder 10, wobei die Angabe der Aktion des SCP mindestens eines von Folgenden umfasst:

eine Angabe, dass der SCP einen NF-Erzeuger aus den NF-Erzeugerkandidaten auswählt, mit dem Aufruf der Dienstoperation fortfährt und die erforderlichen NF-Profilinformationen des ausgewählten NF-Erzeugers in eine Nachricht an den NF-Verbraucher aufnimmt;
eine Angabe, dass der SCP einen NF-Erzeuger aus den NF-Erzeugerkandidaten auswählt und ohne Aufruf der Dienstoperation die erforderlichen NF-Profilinformationen des ausgewählten NF-Erzeugers an den NF-Verbraucher zurücksendet; oder
eine Angabe, dass der SCP die erforderlichen NF-Profilinformationen des ermittelten NF-Erzeugers ohne Auswahl eines NF-Erzeugers zurücksendet.

12. Verfahren (400) nach Anspruch 11, wenn abhängig von Anspruch 10, ferner umfassend:

Empfangen von NF-Erzeugerkandidaten aus der NRF, die mit dem einen oder den mehreren bevorzugten Parameter übereinstimmen, die durch die Angabe bevorzugter Parameter angegeben sind, und Auswählen des NF-Erzeugers aus den NF-Erzeugerkandidaten, wobei das Senden ferner Senden der erforderlichen NF-Profilinformationen des ausgewählten NF-Erzeugers in einer Antwortnachricht für die Dienstoperation umfasst, die von dem ausgewählten NF-Erzeuger empfangen und an den NF-Verbraucher weitergeleitet wird; oder
Empfangen der NF-Erzeugerkandidaten aus der NRF, die nicht mit mindestens einem des einen oder der mehreren bevorzugten Parameter übereinstimmen, die durch die Angabe bevorzugter Parameter angegeben sind, und Auswählen des NF-Erzeugers aus den NF-Erzeugerkandidaten, wobei das Senden ferner Senden der erforderlichen NF-Profilinformationen des ausgewählten NF-Erzeugers in einer Antwortnachricht für die Dienstoperation umfasst, die von dem ausgewählten NF-Erzeuger empfangen und an den NF-Verbraucher weitergeleitet wird.

13. Verfahren (400) nach Anspruch 11, wenn abhängig von Anspruch 10, ferner umfassend:
Empfangen der NF-Erzeugerkandidaten aus dem NRF, die nicht mit dem mindestens einen des einen oder der mehreren bevorzugten Parameter übereinstimmen, die durch die Angabe bevorzugter Parameter angegeben sind, und Auswählen des NF-Erzeugers aus den NF-Erzeugerkandidaten gemäß der Angabe der Aktion des SCP, wobei das Senden ferner Senden der erforderlichen NF-Profilinformationen des ausgewählten NF-Erzeugers in einer Fehlernachricht für die Dienstoperation umfasst, wobei die Fehlernachricht für die Dienstoperation ferner einen Ursachencode hinsichtlich der Nichtübereinstimmung mit dem mindestens einen des zweiten Satzes von bevorzugten Parametern umfasst.

14. Verfahren (400) nach Anspruch 9 bis 13, wobei die Anforderungsnachricht für die Dienstoperation ferner Folgendes umfasst:
eine Übereinstimmungsergebnisangabe, dass der SCP ein Übereinstimmungsergebnis mindestens eines des zweiten Satzes von bevorzugten Parametern an den NF-Verbraucher zurücksenden soll.

15. Verfahren (400) nach Anspruch 14, wenn abhängig von Anspruch 12, wobei die Antwortnachricht für die Dienstoperation, die von dem NF-Erzeuger empfangen und an den NF-Verbraucher weitergeleitet wird, ferner Folgendes umfasst:
das Übereinstimmungsergebnis des mindestens einen des zweiten Satzes von bevorzugten Parametern.

16. Verfahren (400) nach Anspruch 14, wenn abhängig von Anspruch 13, wobei die Fehlernachricht für die Dienstoperation ferner Folgendes umfasst:
das Übereinstimmungsergebnis des mindestens einen des zweiten Satzes von bevorzugten Parametern.

17. Netzwerkfunktionsverbraucher, NF-Verbraucher, (800), umfassend mindestens einen Prozessor (801), der so ausgelegt ist, dass er nach einem der Ansprüche 1 bis 8 funktioniert.

18. Dienstkommunikationsproxy, SCP, (1000), umfassend mindestens einen Prozessor (1001), der so ausgelegt ist, dass er nach einem der Ansprüche 9 bis 16 funktioniert.

19. Computerprogramm, umfassend Anweisungen, die bei Ausführung durch mindestens einen Prozessor den mindestens einen Prozessor zum Durchführen des Verfahrens nach einem der Ansprüche 1 bis 8 und/oder einem der Ansprüche 9 bis 16 veranlassen.


**Revendications**

1. Procédé (300) réalisé par un consommateur de fonction de réseau, NF, le procédé comprenant :

la transmission (S301), à un proxy de communication de service, SCP, d'un message de demande pour une opération de service, dans lequel le message de demande pour l'opération de service comprend au moins une indication que le SCP doit retourner des informations de profil NF requises d'au moins un producteur NF découvert par le SCP ; et
la réception (S303), depuis le SCP, des informations de profil NF requises de l'au moins un producteur NF, **caractérisé en ce que**
le message de demande pour l'opération de service comprend en outre :

un premier ensemble de paramètres obligatoires et un deuxième ensemble de paramètres préférés ; et
une indication d'une action du SCP réalisée lorsque des candidats producteurs NF, qui sont découverts par le SCP à partir d'une fonction de référentiel de réseau, NRF, et qui correspondent au premier ensemble de paramètres obligatoires, ne correspondent pas à l'au moins un du deuxième ensemble de paramètres préférés.

2. Procédé (300) selon la revendication 1, dans lequel le message de demande pour l'opération de service comprend en outre :

une indication de paramètre préféré d'un ou plusieurs paramètres préférés dans le deuxième ensemble,
dans lequel l'indication de l'action du SCP indique l'action du SCP réalisée lorsque les candidats producteurs NF ne correspondent pas à au moins un des un ou plusieurs paramètres préférés indiqués par l'indication de paramètre préféré.

3. Procédé (300) selon la revendication 1 ou 2, dans lequel l'indication de l'action du SCP comprend au moins l'une parmi :

une indication que le SCP sélectionne un producteur NF parmi les candidats producteurs NF, continue avec une invocation de l'opération de service, et inclut les informations de profil NF requises du producteur NF sélectionné dans un message au consommateur NF ;
une indication que le SCP sélectionne un producteur NF parmi les candidats producteurs NF, et retourne les informations de profil NF requises du producteur NF sélectionné au consommateur NF sans invocation de l'opération de service ; ou
une indication que le SCP retourne les informations de profil NF requises des candidats producteurs NF découverts sans sélection d'un producteur NF.

4. Procédé (300) selon la revendication 3 lorsqu'elle dépend de la revendication 2, dans lequel :

le producteur NF est sélectionné parmi des candidats producteurs NF qui correspondent aux un ou plusieurs paramètres préférés indiqués par l'indication de paramètre préféré et ladite réception comprend en outre la réception des informations de profil NF requises du producteur NF sélectionné dans un message de réponse pour l'opération de service reçu depuis le producteur NF sélectionné et transféré par le SCP ; ou
le producteur NF est sélectionné parmi les candidats producteurs NF qui ne correspondent pas à au moins un des un ou plusieurs paramètres préférés indiqués par l'indication de paramètre préféré et ladite réception comprend en outre la réception des informations de profil NF requises du producteur NF sélectionné dans un message de réponse pour l'opération de service reçu depuis le producteur NF et transféré par le SCP.

5. Procédé (300) selon la revendication 3 lorsqu'elle dépend de la revendication 2, dans lequel :
le producteur NF est sélectionné parmi les candidats producteurs NF qui ne correspondent pas à au moins un des un ou plusieurs paramètres préférés indiqués par l'indication de paramètre préféré et ladite réception comprend en outre la réception des informations de profil NF requises du producteur NF sélectionné dans un message d'échec pour l'opération de service, dans lequel le message d'échec pour l'opération de service comprend en outre un code de cause de non-correspondance de l'au moins un du deuxième ensemble de paramètres préférés.

6. Procédé (300) selon l'une quelconque des revendications 1 à 5, dans lequel le message de demande pour l'opération de service comprend en outre :
une indication de résultat de correspondance indiquant que le SCP doit retourner, au consommateur NF, un résultat de correspondance d'au moins un du deuxième ensemble de paramètres préférés.

7. Procédé (300) selon la revendication 6 lorsqu'elle dépend de la revendication 4, dans lequel le message de réponse pour l'opération de service reçu depuis le producteur NF et transféré par le SCP comprend en outre :
le résultat de correspondance de l'au moins un du deuxième ensemble de paramètres préférés.

8. Procédé (300) selon la revendication 6 lorsqu'elle dépend de la revendication 5, dans lequel le message d'échec pour l'opération de service comprend en outre :
le résultat de correspondance de l'au moins un du deuxième ensemble de paramètres préférés.

9. Procédé (400) réalisé par un proxy de communication de service, SCP, le procédé comprenant :

la réception (S401), depuis un consommateur de fonction de réseau, NF, d'un message de demande pour une opération de service, dans lequel le message de demande pour l'opération de service comprend au moins une indication que le SCP doit retourner des informations de profil NF requises d'au moins un producteur NF découvert par le SCP ; et
la transmission (S403), au consommateur NF, des informations de profil NF requises de l'au moins un producteur NF,
**caractérisé en ce que**
le message de demande pour l'opération de service comprend en outre :

un premier ensemble de paramètres obligatoires et un deuxième ensemble de paramètres préférés ; et
une indication d'une action du SCP réalisée lorsque des candidats producteurs NF, qui sont découverts par le SCP à partir d'une fonction de référentiel de réseau, NRF, et qui correspondent au premier ensemble de paramètres obligatoires, ne correspondent pas à au moins un du deuxième ensemble de paramètres préférés.

10. Procédé (400) selon la revendication 9, dans lequel le message de demande pour l'opération de service comprend en outre :

une indication de paramètre préféré d'un ou plusieurs paramètres préférés dans le deuxième ensemble, dans lequel l'indication de l'action du SCP indique l'action du SCP réalisée lorsque les candidats producteurs NF ne correspondent pas à au moins un des un ou plusieurs paramètres préférés indiqués par l'indication de paramètre préféré.

11. Procédé (400) selon la revendication 9 ou 10, dans lequel l'indication de l'action du SCP comprend au moins l'une parmi :

une indication que le SCP sélectionne un producteur NF parmi les candidats producteurs NF, continue avec une invocation de l'opération de service, et inclut les informations de profil NF requises du producteur NF sélectionné dans un message au consommateur NF ;
une indication que le SCP sélectionne un producteur NF parmi les candidats producteurs NF, et retourne les informations de profil NF requises du producteur NF sélectionné au consommateur NF sans invocation de l'opération de service ; ou
une indication que le SCP retourne les informations de profil NF requises des candidats producteurs NF découverts sans sélection d'un producteur NF.

12. Procédé (400) selon la revendication 11 lorsqu'elle dépend de la revendication 10, comprenant en outre :

la réception, depuis la NRF, de candidats producteurs NF qui correspondent aux un ou plusieurs paramètres préférés indiqués par l'indication de paramètre préféré et la sélection du producteur NF parmi les candidats producteurs NF, dans lequel ladite transmission comprend en outre la transmission des informations de profil NF requises du producteur NF sélectionné dans un message de réponse pour l'opération de service reçu depuis le producteur NF sélectionné et transféré au consommateur NF ; ou
la réception, depuis la NRF, des candidats producteurs NF qui ne correspondent pas à l'au moins un des un ou plusieurs paramètres préférés indiqués par l'indication de paramètre préféré et la sélection du producteur NF parmi les candidats producteurs NF, dans lequel ladite transmission comprend en outre la transmission des informations de profil NF requises du producteur NF sélectionné dans un message de réponse pour l'opération de service reçu depuis le producteur NF et transféré au consommateur NF.

13. Procédé (400) selon la revendication 11 lorsqu'elle dépend de la revendication 10, comprenant en outre :
la réception, depuis la NRF, des candidats producteurs NF qui ne correspondent pas à l'au moins un des un ou plusieurs paramètres préférés indiqués par l'indication de paramètre préféré et la sélection du producteur NF parmi les candidats producteurs NF, selon l'indication de l'action du SCP, dans lequel ladite transmission comprend en outre la transmission des informations de profil NF requises du producteur NF sélectionné dans un message d'échec pour l'opération de service, dans lequel le message d'échec pour l'opération de service comprend en outre un code de cause de non-correspondance de l'au moins un du deuxième ensemble de paramètres préférés.

14. Procédé (400) selon l'une quelconque des revendications 9 à 13, dans lequel le message de demande pour l'opération de service comprend en outre :
une indication de résultat de correspondance indiquant que le SCP doit retourner, au consommateur NF, un résultat de correspondance d'au moins un du deuxième ensemble de paramètres préférés.

15. Procédé (400) selon la revendication 14 lorsqu'elle dépend de la revendication 12, dans lequel le message de réponse pour l'opération de service reçu depuis le producteur NF et transféré au consommateur NF comprend en outre :
le résultat de correspondance de l'au moins un du deuxième ensemble de paramètres préférés.

16. Procédé (400) selon la revendication 14 lorsqu'elle dépend de la revendication 13, dans lequel le message d'échec pour l'opération de service comprend en outre :
le résultat de correspondance de l'au moins un du deuxième ensemble de paramètres préférés.

**17.** Consommateur de fonction de réseau, NF, (800), comprenant au moins un processeur (801) configuré pour fonctionner selon l'une quelconque des revendications 1 à 8.

**18.** Proxy de communication de service, SCP, (1000), comprenant au moins un processeur (1001) configuré pour fonctionner selon l'une quelconque des revendications 9 à 16.

**19.** Programme informatique comprenant des instructions qui, lorsqu'elles sont exécutées par au moins un processeur, amènent l'au moins un processeur à réaliser le procédé selon l'une quelconque des revendications 1 à 8 et/ou l'une quelconque des revendications 9 à 16.

## Model A

**FIG. 1A**

## Model B

**FIG. 1B**

## Model C

**FIG. 1C**

## Model D

**FIG. 1D**

EP 4 490 900 B1

FIG. 2A

FIG. 2B

— 300

Transmit, To An SCP, A Request Message For A Service Operation, Which At Least Comprises An Indication That The SCP Shall Return Required NF Profile Information Of At Least One NF Producer Discovered By The SCP

— S301

Receive, From The SCP, The Required NF Profile Information Of The At Least One NF Producer

— S303

## FIG. 3

— 400

Receive, From AN NF Consumer, A Request Message For A Service Operation, Which At Least Comprises An Indication That The SCP Shall Return Required NF Profile Information Of At Least One NF Producer Discovered By The SCP

— S401

Transmit, To The NF Consumer, The Required NF Profile Information Of The At Least One NF Producer

— S403

## FIG. 4

EP 4 490 900 B1

**10** RAN/UE  **20** NRF  **30** AMF  **40** SCP  **50** SMF1 (Service area A)

UE is in service area A — **500**

PDU Session Establishment Req — **502**

Nsmf_PDUSession_CreateSMContext req
(discovery-* query: DNN, preferred-tai=UELocation

**504** — *3gpp-Sbi-Delegated-Disc-Behavior;*
*returnInfo[servingArea];*
*unmatchAct=selectReturn)*

Nnrf_NFdisc_req
(discovery-*query: DNN,preferred-tai=UELocation)
**506**

Nnrf_NFdisc_resp
(SMFs,SearchResult preferredTaiMatchInd: true)
**508**

## FIG. 5

Select SMF — 510

Nsmf_PDUSession
_CreateSMContext req — 512

Nsmf_PDUSession
_CreateSMContext resp — 514

Nsmf_PDUSession_CreateSMContext resp
**(3gpp-Sbi-Delegated-Disc-Result: nfinfo=[service Area A])**

516

Continue PDU session establishment and succeed — 518

AMF use Service Area A for DTSSA
service logic in subsequent UE
mobility procedures — 520

PDU Session Establishment with DTSSA in Model D (Anchor SMF serve UE location)

FIG. 5 (continued)

FIG. 6

Nsmf_PDUSession_CreateSMContext failure
*Cause:PREFERRED_UNMATCH*
*(3GPP-Sbi-Delegated-Disc-Result: nfInfo=[service Area A])*

612

Nsmf_PDUSession_CreateSMSontext req
(discovery-* query, ta=UELocation, SMF 1 info
*3gpp-Sbi-Delegated-Disc-Behavior:*
*returnInfo[servingArea])*

614

Nnrf_Nfdisc_req
(discovery-* query: tai=UELocation)

616

Nnrf_NFdisc_resp
(SMFs)

618

620 — Select SMF 2

Nsmf_PDUSession_CreateSMContext req (SMF 1 Info)

622

FIG. 6 (continued)

624 — Nsmf_PDUSession_Create req

626 — Nsmf_PDUSession_Create resp

628 — Nsmf_PDUSession_CreateSMContext resp

630 — Nsmf_PDUSession_CreateSMContext_Resp
*(3gpp-Sbi-Delegated-Disc-Result: nfInfo=[serivce Area B])*

Continue PDU session establishment and succeed — 632

AMF use Service Area A
and Service Area B for
DTSSA service logic in
subsequent UE mobility
procedures — 634

PDU Session Establishment with DTSSA in Model D (Anchor SMF not serve UE location)

FIG. 6 (continued)

NF Consumer 700

Transmitting Unit
701

Receiving Unit
703

FIG. 7

Processor
801

Memory
803

NF Consumer 800

FIG. 8

SCP 9<u>00</u>

Receiving Unit
<u>901</u>

Transmitting Unit
<u>903</u>

## FIG. 9

Processor
<u>1001</u>

Memory
<u>1003</u>

SCP <u>1000</u>

## FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- eSBA SMF and PCF selection-option 2. *3GPP TS 23.501 v16.1.0*, 24 June 2019, vol. SA WG2 (Sapporo)
- *eSBA: SMF and PCF selection*, 07 May 2019, vol. SA WG2 (Reno)
- System architecture for the 5G System (5GS); Stage 2. *3GPP TS 23.501, V17.3.0*, December 2021

- 5G System; Network function repository services; Stage 3. *3GPP TS 29.510, V17.4.0*, December 2021
- 5G System; Technical Realization of Service Based Architecture; Stage 3. *3GPP TS 29.500, V17.5.0*, December 2021